# EUROPEAN PATENT APPLICATION

(11) **EP 4 749 073 A1**
(43) Date of publication of application: **27.05.2026**
(21) Application number: 24215348.4
(22) Date of filing: 26.11.2024
(51) Int. Cl.: E06B 3/66, E06B 3/677

(54) **SEALING OF GAP BY MEANS OF COVER COMPRISING SOLIDIFIED SEAL MATERIAL**

(71) Applicant: VKR Holding A/S, 2970 Hørsholm (DK)
(72) Inventor: Bouwens, Willibrordus Servatius, 2970 Hørsholm (DK)
(74) Representative: Høiberg P/S

(57) **Abstract**

The present disclosure relates to a method of manufacturing a vacuum insulated glass unit. The method comprises providing a vacuum insulated glass unit assembly (1) comprising a first glass sheet (2) and a second glass sheet (3), a plurality of support structures (5) distributed in a gap (6) between a first major surface (2a) of the first glass sheet (2) and first major surface (3a) of the second glass sheet (3), a peripheral edge seal (4) which is configured to seal the gap (6), wherein the first glass sheet (2) comprises a through hole (10), wherein the through hole (10) extends between the first major surface (2a) and a second, oppositely directed, major surface (2b) of the first glass sheet (2). A cover (20) is provided. The cover comprises a covering body (21) and a solidified seal material (22), The solidified seal material may comprise glass solder material. The solidified seal material is attached to the covering body (21, 21a) and encompasses the through hole (10) in an uninterrupted manner. The cover is arranged so that the solidified seal material (22) is placed between a surface part (2sp, 10s) of the first glass sheet (2) and the covering body (21), and so that the covering body (21) covers at least a part (10a) of the through hole (10). The gap (6) is evacuated by means of a pump (30), so that gas (GA), such as air, in the gap (6) is evacuated through the through hole (10). The solidified seal material (22) is heated by means of a heater (7) so as to soften the solidified seal material, thereby providing that the softened seal material (22) adhere to the surface part (2sp, 10s) of the first glass sheet (2) around the through hole (10). The softened seal material (22) is cooled so as to harden the softened seal material, thereby sealing the evacuated gap (6). The evacuation of the gap (6) by means of the pump (30) may comprise that the gas (GA) is evacuated from the gap (6) through one or more gas passages (25), wherein the one or more gas passages (25) is/are arranged between said surface part (2sp, 10s) of the first glass sheet (2) and a surface (22a) of the solidified seal material (22) which faces said surface part (2sp, 10s) of the first glass sheet (2).

## Description

The present disclosure relates to a method of manufacturing a vacuum insulated glass unit.

### Background

Vacuum Insulated Glass (VIG) units provides advantages, such as improved heat insulation when compared to amount of material use, advantages related to reduced weight, space savings and other advantages.

The improved methods for manufacturing VIG units and components for VIG units are under development. The method of manufacturing a VIG unit among others comprises evacuating a gap between two glass sheets through a through hole in a glass sheet, and the evacuated gap is then sealed by a sealing solution. The evacuation of the gap is provided by means of a pump, e.g. by means of an evacuation cup or by means of placing the entire VIG unit assembly in a vacuum chamber. Various sealing solutions for sealing the through hole and hence the evacuated gap have been suggested.

Some sealing solutions suggest using a glass tube or ceramic tube that is then heated to melt and thereby seal the evacuated gap. This heating and melting of the tube may e.g. be provided by means of a heating element arranged in an evacuation cup.

Patent document EP3865464 A1 discloses a solution where a cover is used for covering a through hole in glass sheet of a VIG unit so as to seal an evacuated gap. An adhesive fixes the cover to the glass sheet, and the cover may be placed in a stepped through hole. One or more gas flow tunnels is/are formed by providing discontinuations in the adhesive to enable evacuation of the gap.

Patent document KR20230086925A illustrates a solution for sealing an evacuation hole of a VIG unit. Here, a surface of a cap made from tempered glass is covered by sintered glass frit. a spring is in contact with the sintered glass frit and is fixed in a compressed state in the VIG.

Patent document CN219824008U discloses sealing a VIG unit gap by means of a cover arranged in a stepped/countersunk through hole. A laser is used for sealing the gap by melting the a glass body and/or the cover.

Patent document WO20217779 discloses use of a pressing mechanism arranged in an evacuation cup so as to exert a force onto a cover/lid used for sealing an evacuated gap of a VIG unit.

Patent document KR20130022535 discloses a further sealing cap solution used for sealing an evacuated gap of a VIG unit. Here, the sealing cap is maintained below the plane of the VIG unit glass sheet surface so as to not protrude to the outer surface of the glass sheet surface.

Patent document US2021388667 discloses providing a an exhaust channel passage through which gas is exhausted.

The present disclosure may provide a solution which enables providing an improved seal of an evacuated gap of a VIG unit. The present disclosure may additionally or alternatively provide a solution which enables providing an evacuation of a VIG unit gap. The present disclosure may additionally or alternatively provide a cost efficient solution, enable fast and efficient VIG unit manufacturing, and/or help to provide an improved VIG unit.

### Summary

The present disclosure relates, in a first aspect, to a method of manufacturing a vacuum insulated glass unit. The method comprises providing a vacuum insulated glass unit assembly. The vacuum insulated glass unit assembly comprises:
- a first glass sheet and a second glass sheet,
- a plurality of support structures distributed in a gap between a first major surface of the first glass sheet and first major surface of the second glass sheet, and
- a peripheral edge seal which is configured to seal the gap,

The first glass sheet comprises a through hole, wherein the through hole extends between the first major surface and a second, oppositely directed, major surface of the first glass sheet. The method moreover comprises providing a cover. The provided cover comprises a covering body and a solidified seal material. The solidified seal material may comprise glass solder material. The solidified seal material is attached to the covering body. The provided cover is arranged so that the solidified seal material is placed between a surface part of the first glass sheet and the covering body, and so that the covering body covers at least a part of the through hole. The gap of the heated vacuum insulated glass unit assembly is evacuated, such as by means of a pump, so that gas, such as air, in the gap is evacuated through the through hole. Then the solidified seal material is heated by means of a heater so as to soften the solidified seal material, thereby providing that the softened seal material adhere to the first glass sheet around the through hole. The softened seal material is then cooled so as to harden the softened seal material, thereby sealing the evacuated gap.

The VIG unit manufacturing solution according to embodiments of the present disclosure may provide several advantages. For example, faster and/or more reliable VIG unit manufacturing may be obtained. A more simple VIG unit manufacturing solution, and/or more freedom in VIG unit manufacturing, may be obtained by a solution according to embodiments of the present disclosure.

For example, in some embodiments, advantageous evacuation of the gap of the VIG unit assembly may be obtained. For example, in some embodiments, "vacuum clamping" of the peripheral edge seal and/or subsequent gap sealing after the gap is evacuated may be enabled in a more simple way.

In some embodiments, said seal material of the covering body comprises glass solder material. The solidified seal material of the cover, e.g. comprising the glass solder material, may be a structurally hard seal material that is at a temperature where it is not liquified/fluent. For example at a temperature below the glass transition temperature of the seal material.

In some embodiments of the present disclosure, the solidified seal material may encompass the through hole in an uninterrupted manner, for example by means of a continuous ring of seal material, such as a continuous, annular ring of seal material. This may e.g. allow for reduction of seal material amount, it may enable a more space saving solution as the seal material may be thinner, it may provide a sealing solution with larger structural integrity and//or a uniform manufacturing result. Additionally or alternatively, it may provide a reliable sealing solution and/or a solution that provides manufacturing advantages.

In one or more embodiments of the present disclosure, said evacuation of the gap by means of the pump comprises that the gas is evacuated from the gap through one or more gas passages wherein the one or more gas passages is/are arranged between said surface part of the first glass sheet and a surface of the solidified seal material which faces said surface part of the first glass sheet.

This may e.g. enable a solution where an improved sealing option may be obtained and/or a more simple cover manufacturing may be allowed. Hence, instead of terminating the solder material at one or more predefined locations at the cover surface so as to provide a predefined flow path for evacuated air through the seal material, one or more gas passages may be arranged between the surface part of the first glass sheet and a surface of the solidified seal material which faces said surface part of the first glass sheet.

The seal material may thus be configured to extend continuously and uninterrupted and with substantially no discontinuations. so that no designed predetermined flow path is formed by and between the first glass sheet, the surface of the covering body, and between opposing side surface parts of the seal material facing a predefined flow path.

In one or more embodiments of the present disclosure, the surface of the solidified seal material may support, such as directly support, on the surface part of the first glass sheet during said evacuation of the gap by means of the pump.

This may e.g. enable more simple VIG unit manufacturing and/or more simple sealing of the gap. Instead, the cover may support directly on the surface part of the first glass sheet, and when the gap is to be seal after it has been evacuated, the seal material of the cover may be heated and softened.

In some embodiments, prior to the heating and softening of the seal material of the cover, the flow path may be present between the seal material and the surface part of the first glass sheet on which the solidified seal material supports.

In one or more embodiments of the present disclosure, at least 80%, such as at least 95%, such as at least 98%, of the evacuated gas may be evacuated through said one or more gas passages. Said one or more gas passages arranged between said surface part of the first glass sheet and the surface of the solidified seal material may thus be the primary gas passages, or even substantially the sole/only gas passages for the evacuated gas from the gap of the VIG unit assembly.

In one or more embodiments of the present disclosure, said one or more gas passages is/are provided as a consequence of a surface roughness of the surface of the solidified seal material. This may provide a simple and/or efficient gas evacuation. It may also help to provide a simple and/or efficient gap sealing solution. It may additionally help to enable a space saving solution and/or a more cost efficient solution.

The surface roughness of the seal material may in embodiments be obtained as a result of a first pre-heating / pre-firing and pre-softening of the seal material, such as the glass solder material, that was provided in order to obtain the solidified seal material at the cover.

In one or more embodiments of the present disclosure, said one or more gas passages may be provided as a consequence of a surface roughness of said surface part of the first glass sheet. This may provide a simple and/or efficient gas evacuation. It may also help to provide a simple and/or efficient gap sealing solution. It may additionally help to enable a space saving solution and/or a more cost efficient solution.

The surface roughness of said surface part of the first glass sheet may in embodiments be obtained as a result of cutting, such as laser cutting in the surface of the glass sheet. For example it may be a result of cutting a part of the through hole, such as a stepped portion of the through hole, in the glass sheet. In some embodiments this cutting may be done by means of a laser.

In one or more embodiments of the present disclosure, said one or more gas passages may be provided as a consequence of a combination of the surface roughness of the surface of the solidified seal material and the surface roughness of said surface part of the first glass sheet. This may provide a simple and/or efficient gas evacuation. It may also help to provide a simple and/or efficient gap sealing solution. It may additionally help to enable a space saving solution and/or a more cost efficient solution.

In one or more embodiments of the present disclosure, the surface roughness of the surface of the solidified seal material which faces said surface part of the first glass sheet may be above 10 µm, such as above 25 µm, such as above 35 µm,
such as wherein said surface roughness is the Ra or Rz surface roughness parameter, preferably the Ra parameter.

In some embodiments of the present disclosure, the surface roughness of the surface of the solidified seal material which faces said surface part of the first glass sheet is between 10 µm, and 150 µm such as between 25 µm and 100 µm, such as between 35 µm and 80 µm,
such as wherein said surface roughness is the Ra or Rz surface roughness parameter, preferably the Ra parameter.

This may e.g. provide sufficient surface roughness to enable an evacuation of the gap while also providing a solution that may enable an advantageous subsequent sealing of the gap.

In one or more embodiments of the present disclosure, the surface roughness of the surface part of the first glass sheet which faces the solidified seal material may be above 10 µm, such as above 25 µm, such as above 35 µm, such as wherein said surface roughness is the Ra or Rz surface roughness parameter, preferably the Ra parameter.

In one or more embodiments of the present disclosure, the surface roughness of the surface part of the first glass sheet which faces the solidified seal material is between 10 µm, and 150 µm such as between 25 µm and 100 µm, such as between 35 µm and 80 µm, such as wherein said surface roughness is the Ra or Rz surface roughness parameter, preferably the Ra parameter.

The surface roughness may be defined along a sampling length corresponding to the full length, such as the diameter, of the solidified seal material at the top of the solidified seal material. This may in practice be defined along an envisaged circle which is concentric with the solidified solder material and which has a diameter providing that the circle is arranged substantially midways between the outer and inner periphery of the solidified solder material. The surface roughness may e.g. be determined by means of a profilometer or a laser scanner.

The Ra surface roughness parameter may define, within the sampling length, the average roughness of the solidified seal material surface, e.g. including the deviations from the mean line.

The Rz surface roughness parameter may define the difference between the highest peak and lowest valley within the sampling length. It may define the maximum height of the profile.

Surface roughness may be defined according to ISO 21920, such as ISO 21920-2.

In some embodiments of the present disclosure, the surface roughness of the surface part of the first glass sheet which faces the solidified seal material may have a surface roughness that is lower, such as at least 10 times lower, e.g. at least 20 times lower or at least 50 times lower than the surface roughness of the seal material surface. This may e.g. enable enhanced bonding/connection and thus a stronger sealing.

In some embodiments of the present disclosure, said surface roughness of the surface of the solidified seal material may be obtained as a result of a pre-heating of the seal material, and a subsequent pre-cooling of the seal material so as to solidify the heated seal material.

In one or more embodiments of the present disclosure, said pre-heating comprises heating the glass solder material of the cover to a temperature above the rated glass transition temperature of the glass solder material.

In one or more embodiments of the present disclosure, said surface roughness of the seal material surface of the cover is the surface roughness over at least 90%, such as at least 95%, such as at least 98% of the surface area of the solidified seal material surface which is unbonded to the surface of the covering body.

In one or more embodiments of the present disclosure, said solidified seal material has a height, such as a maximum height, of less than 0.6 mm, such as less than 0.4 mm, such as less than 0.3 mm. Said height may e.g. provide a more space saving and/or cost efficient solution.

In one or more embodiments of the present disclosure, the solidified seal material comprises or consist of a pre-fired glass solder material, such as a pre-fired glass solder material that has been subjected to a pre-firing at the covering body prior to said arranging of the cover.

The solidified seal material of the cover that is arranged so as to cover the through hole may be the result of an initial, first heating/firing, also called pre-heating or pre-firing, of the glass solder material so as to soften the solder material on the covering body during manufacturing of the cover, where the first heating is provided prior to arranging the cover so as to cover the through hole. Hence, the heating of the solidified seal material by means of said heater so as to soften it to provide that the softened seal material adhere to the surface part of the first glass sheet around the through hole, may be considered a subsequent, such as second, heating/firing of the seal material. Tests have shown that such a pre-fired seal material may be advantageous, e.g. in relation to density and/or in relation to reducing the amount of outgassing of material from the seal material when the seal material is heated and thereby softened to seal the evacuated gap.

The inventors have found that pre-firing /pre-heating of the seal material comprising the glass solder material, e.g. in a vacuum chamber under reduced pressure, so as to provide the solidified glass solder material, may provide a seal material with a surface roughness suitable for providing/obtaining said gas channels. Additionally, the inventors have found that pre-firing the glass solder material, e.g. in a vacuum chamber with reduced pressure, may provide a seal material that may be more dense and/or provide a stronger sealing solution.

In one or more embodiments of the present disclosure, the height, such as local maximum height, of the solidified seal material varies less than 0.2 mm, such as less than 0.1 mm, such as less than 0.05 mm, for example less than 0.03 mm over the entire extent of the seal material.

This may e.g. provide a more space saving solution and/or a more efficient sealing solution. The local maximum height may include variations caused by surface roughness of the seal material, or said local maximum height may exclude variations caused by surface roughness of the seal material.

In one or more embodiments of the present disclosure, the surface roughness of the seal material surface is provided by means of protrusions at/in the surface of the seal material of the cover, wherein said protrusions are arranged staggered, such as substantially randomly, across the surface of the glass solder material.

In some embodiments, the staggered protrusions may provide that the one or more gas passages is/are non-straight, such as so that the protrusions may cause a deviation of the evacuated gas from a straight line during gas evacuation through the one or more gas passages.

In some embodiments, the staggered protrusions may be obtained by an initial heating of the seal material during a first firing of the seal material on the cover during cover manufacturing.

In some embodiments of the present disclosure, the solidified seal material may encompass the through hole in an uninterrupted manner, and comprise or consist of a continuous ring of seal material, such as a continuous, annular ring of seal material. This may e.g. allow for reduction of seal material amount, it may enable a more space saving solution as the seal material may be thinner, it may provide a sealing solution with larger structural integrity and//or a uniform manufacturing result.

In some embodiments of the present disclosure, the solidified seal material, such as the glass solder material, prior to said heating of the solidified seal material by means of said heater, many be in continuous, un-interrupted contact with, and continuously adheres to, the covering body surface over substantially the full extent, such as the full length, of the continuous ring of seal material.

This may e.g. enable easy arranging of the cover and seal material in one operation. It may also help to obtain an improved and/or more reliable sealing of the evacuated gap.

In one or more embodiments of the present disclosure, the method comprises providing said through hole, such as the full through hole, in the first glass sheet, wherein said providing of the through hole comprises laser cutting at least a part of the through hole in the first glass sheet, wherein said laser cutting is conducted prior to or during assembling of the vacuum insulated glass (VIG) unit assembly.

Laser cutting of the through hole may e.g. provide a solution that may be easy to control and/or adapt. The laser cutting of the through hole may also enable a cost efficient and/or fast solution. The laser cutting may additionally enable provide a certain, such as predefined, surface roughness at the glass sheet surface which may help to improve or provide one or more gas passages between the seal material of the cover and the glass sheet.

In some embodiments, the entire through hole, including e.g. a stepped portion and a smaller portion, in the first glass sheet may be provided by means of the laser cutting.

The surface that has been subjected to the laser cutting may comprise a surface roughness due to the laser cutting. In some embodiments a polishing of the surface that has been subjected to a laser cutting may or may not be post-processed, e.g. by a polishing.

In one or more embodiments of the present disclosure, the first glass sheet may be a tempered glass sheet, such as a thermally tempered glass sheet, and wherein said laser cutting is provided prior to tempering of the first glass sheet.

In one or more embodiments of the present disclosure, a clamping force is provided by means of a clamping part so as to force the covering body towards said surface part of the first glass sheet, such as during and/or after said heating of the solidified seal material so as to soften the solidified seal material.

The clamping force may e.g. provide an improved manufacturing of a VIG unit. For example, it may help to provide a consistent yield of VIG units and/or an improved seal of the evacuated gap.

In one or more embodiments of the present disclosure, said clamping force is configured to keep the cover at a desired cover space over the through hole , such as during said evacuation of the gap and/or during moving of the Vacuum Insulated Glass unit assembly.

This may provide an improved manufacturing of a VIG unit. For example, it may help to provide a consistent yield of VIG units.

In one or more embodiments of the present disclosure, the clamping force directly or indirectly pushes the covering body so as to deform the softened seal material.

This may provide an improved seal of the evacuated gap.

In one or more embodiments of the present disclosure, the clamping force pushes the covering body so as to provide that a part of the softened seal material moves in between a side surface of the covering body and a side surface of the first glass sheet which faces the side surface of the covering body.

This may e.g. enable improved control of the position of the covering body surface that faces away from the gap. Additionally or alternatively, it may provide improved strength as the seal material hereby may adhere to a larger surface area.

In one or more embodiments of the present disclosure, the clamping part comprises a spring and/or a weight configured to provide said clamping force.

This may e.g. provide an improved sealing of the gap and/or a faster and/or more simple manufacturing solution. For example, a use of a spring may be advantageous as it may be reused and provide a consistent, desired force onto the cover. Additionally or alternatively, a spring may provide a space saving and/or a reliable solution.

In one or more embodiments of the present disclosure, a pushing body may be arranged between the clamping part and the covering body, wherein a part, such as a surface, of the pushing body is configured to acts as a mechanical stop so as to prevent the pushing body from pushing the covering body further into the evacuation hole. This may e.g. provide a simple and/or cost efficient and/or controlled covering body displacement.

In one or more embodiments of the present disclosure, the pushing body may be larger than the maximum width, such as the maximum diameter, of the evacuation hole, wherein said part of the pushing body is configured to support on the second major surface of the first glass sheet.

In one or more embodiments of the present disclosure, the method comprises arranging an evacuation cup, such as on the second surface of the first glass sheet, so as to cover the through hole,
wherein said evacuation of the gap comprises evacuating the gap by means of a pump which is in fluid communication with an interior cavity of the evacuation cup.

This may e.g. help to provide a reliable gap evacuation. It may also enable providing a space saving, simple and/or cost efficient VIG unit manufacturing. A plurality of VIG unit assemblies with covers may be arranged in the same furnace and be individually evacuated by means of different cups connected to a pump, such as a common pump.

In one or more embodiments of the present disclosure, the clamping part may be arranged inside the evacuation cup, such as be attached directly or indirectly to a housing of the evacuation cup.

In one or more embodiments of the present disclosure, heating and softening of the peripheral edge seal material may be provided while the evacuation cup evacuates the gap, thereby providing a clamping of the peripheral edge seal material by means of a pressure difference between the gap and the exterior of the vacuum insulated glass unit assembly.

This may e.g. provide an improved peripheral edge seal. It may additionally or alternatively provide an advantageous adaption of the thickness of the peripheral edge seal to the surface topography of the respective glass sheets, such as thermally tempered glass sheets. Thermally tempered glass sheets may be suffering from various surface variations, for example so called roller waves.

Said clamping of the peripheral edge seal may also be referred to as "Vacuum clamping". Here pressure difference between the gap and the VIG unit assembly exterior may provide a force on the peripheral edge seal which may help to provide an improved sealing at the edge of the VIG unit.

In one or more embodiments of the present disclosure, a pushing body may be arranged between the clamping part and the covering body. A part, such as a surface, of the pushing body may be configured to act as a mechanical stop so as to prevent the pushing body from pushing the covering body further into the hole.

This may e.g. enable a controlled displacement of the cover to obtain that the surface of the covering body facing away from the evacuated gap is arranged at a desired level relative to the surface of the second glass sheet when the VIG unit is manufactured. When the seal material at the covering body has been heated and softened by the heater, such as a radiation heater, the seal material may be deformed by means of the pushing body and the clamping part which may push on the pushing body and move the covering body further into the evacuation hole.

In some further embodiments of the present disclosure, the pushing body may be larger than the maximum width, such as the maximum diameter, of the evacuation hole. Said part of the pushing body may be is configured to support on the second major surface of the first glass sheet, and thereby, together with the second major surface, act as a mechanical stop.

In some embodiments, the pushing body may be designed so that the surface of the covering body which faces away from the evacuated gap will be substantially flush with the major surface of the second glass sheet. In some embodiments, the pushing body may be designed so that the surface of the covering body which faces away from the evacuated gap will be arranged below the major surface of the second glass sheet. In still further embodiments, the pushing body may be designed so that the surface of the covering body which faces away from the evacuated gap will be arranged at a level above the major surface of the second glass sheet.

In some embodiments of the present disclosure, said heating of the solidified seal material of the cover so as to soften the solidified seal material to provide that the seal material adhere to the surface part of the first glass sheet around the through hole comprises heating by radiation heating provided by means of a radiation heater which emits a heating beam. This may e.g. be advantageous from a manufacturing point of view. It may e.g. enable a more simple manufacturing solution and/or a more controlled and fast heating of the solidified seal material.

In one or more embodiments of the present disclosure, said radiation heater comprises a laser, and wherein said heating beam is a laser beam.

Laser heating may enable an advantageous local heating of the seal material of the cover. It may also enable a fast heating and/or a more controlled heating of the seal material, e.g. based on a predefined heating profile.

In some embodiments, said laser beam may be configured to be moved so as to revisit and heat the same area of the seal material of the cover a plurality of times, such as at least ten times, for example at least 40 times, such as at least 80 times.

In other embodiments, the radiation heating, such as laser heating, may heat the entire seal material of the cover at once.

In one or more embodiments of the present disclosure, the second glass sheet may be placed between the radiation heater and the seal material of the cover, so that the seal material of the cover is heated by means of a heating beam which is radiated through the second glass sheet.

This may e.g. enable a more simple manufacturing and/or provide more freedom in selecting solutions for the manufacturing of the VIG unit when sealing the gap. For example, it enables using a spring that may be placed directly above the covering body, it may enable using a cover of a material that may absorb the energy from the heating beam, it may enable a more space saving solution and/or the like.

In one or more embodiments of the present disclosure, said heating of the solidified seal material of the cover so as to soften the solidified seal material comprises heating to a temperature above the glass transition temperature of the seal material.

In one or more embodiments of the present disclosure, the through hole is a stepped through hole comprising a smaller diameter portion and a larger diameter portion. The the larger diameter portion is arranged proximate the second surface of the first glass sheet and the smaller diameter portion is arranged proximate the gap. A step surface is arranged between the larger diameter portion and the smaller diameter portion. The arranging of the cover may comprise arranging the solidified seal material opposite to, such as so as to support on, the step surface that the covering body, and the cover is arranged in the larger diameter portion and covers the smaller diameter portion.

The stepped through hole may be a countersunk hole.

A stepped through hole may provide several advantages. For example, it may provide a more space saving solution. It may also enable obtaining a more mechanically resistant solution. The stepped through hole may also enable a more aesthetically pleasing solution.

The step surface may or may not be shaped so as to generally be substantially parallel to a major surface of the same glass sheet.

The larger diameter portion and the smaller diameter portion may in embodiments of the precent disclosure be circular holes. The larger diameter portion and the smaller diameter portion may in embodiments of the precent disclosure be substantially concentric holes.

The step surface may be shaped so as to extend in a direction that is substantially parallel with a plane defined by a major surface of the first glass sheet.

In one or more embodiments of the present disclosure, the diameter of the larger diameter portion is at least 2 mm, such as at least 3 mm, larger than the diameter of the smaller diameter portion. In one or more embodiments of the present disclosure, the diameter of the larger diameter portion is between 5 mm and 12 mm, such as between 6 mm and 9 mm.

This may e.g. provide a space saving solution and/or a more visually pleasing solution.

In one or more embodiments of the present disclosure, the diameter of the covering body is smaller than the diameter of the larger diameter portion, wherein the difference in diameter between the diameter of the covering body and the diameter of the larger diameter portion is less than 1 mm, such as less than 0.6 mm, such as less than 0.4 mm.

This may e.g. provide a more resistant solution.

Experiments have indicated that if the covering body diameter is too small relative to the smaller diameter portion and/or if the smaller diameter portion gets too large, the covering body may be more likely to break.

In some embodiments of the present disclosure, the diameter of the smaller diameter portion may be less than 5 mm, such as less than 4 mm, such as less than 3 mm or less than 2 mm.

In one or more embodiments of the present disclosure, the thickness of the covering body is 2.5 mm or less, such as 1.5 mm or less. In one or more embodiments of the present disclosure, the thickness of the covering body is between 0.7 mm and 2.9 mm, such as between 0.9 mm and 2.4 mm, such as between 1.6 mm and 2.2 mm (endpoints included).

In one or more embodiments of the present disclosure, the depth of the larger diameter portion extends over less than 70%, such as over less than 60%, such as over less than 50%, of the thickness of the first glass sheet. In one or more embodiments of the present disclosure, the depth of the larger diameter portion may be between 20% and 70%, such as between 30% and 60%, such as between 40% and 50% of the thickness of the first glass sheet.

In one or more embodiments of the present disclosure, the depth of the larger diameter portion is between 1 mm and 4 mm, such s between 1.5 mm and 3 mm, such as between 1.9 mm and 2.5 mm.

In one or more embodiments of the present disclosure, the depth, such as the maximum depth, of the larger diameter portion is between 0.05 mm and 0.35 mm larger, such as between 0.15 and 0.25 mm, larger than the thickness, such as the maximum thickness, of the covering body.

In one or more embodiments of the present disclosure, the maximum thickness of the seal material between the covering body and said surface part of the first glass sheet, after said sealing of the gap, may be is between 0.050 mm and 0.4 mm, such as between 0.075 mm and 0.3 mm, such as between 0.125 mm and 0.250 mm.

This may e.g. provide a more space saving solution and/or a solution that is resistant.

In one or more embodiments of the present disclosure, the first glass sheet and/or the second glass sheet has/have a thickness (TH1) between 2 mm and 5 mm, such as between 3 mm and 4 mm (both endpoints included).

In one or more embodiments of the present disclosure, the thickness of the covering body is at least 30% lower, such as at least 50% lower, or at least 60% lower, than the thickness of the first glass sheet. In one or more embodiments of the present disclosure, the thickness of the covering body is between 30% and 85% lower, such as between 40% and 60% lower, such as between 45% and 55% lower, than the thickness of the first glass sheet.

In one or more embodiments of the present disclosure, the thickness of the covering body fulfills one or more of the below criteria a)-d):
a) wherein the thickness of the covering body is lower than the depth of the larger diameter portion,
b) wherein the thickness of the covering body is at least 5% lower or at least 10% lower, than the depth of the larger diameter portion,
c) wherein the thickness of the covering body (21) is between 3% and 30% lower, such as between 5% and 20% lower, such as between 8% and 15% lower than the depth of the larger diameter portion,
d) wherein the thickness of the covering body is between 30% and 85% lower, such as between 40% and 60% lower, such as between 45% and 55% lower, than the thickness of the first glass sheet.

In one or more embodiments of the present disclosure, the method of manufacturing the vacuum insulated glass (VIG) unit comprises laminating the vacuum insulated glass (VIG) unit,
wherein said lamination of the vacuum insulated glass unit comprises attaching a lamination glass sheet to the second major surface of the first glass sheet by means of a lamination interlayer so that the lamination glass sheet extends over and covers the cover and the through hole.

A laminated VIG unit may provide a more safe VIG unit. For example if the VIG unit is used in a roof window. A laminated VIG unit may also provide a more mechanically resistant solution. It may also provide mechanical protection of the cover and the sealed through hole.

In one or more embodiments of the present disclosure, the covering body, after said cooling the softened seal material so as to harden the softened seal material to seal the evacuated gap (6), extends through a plane (PL1) comprising the second major surface (2b) of the first glass sheet (2).

In one or more embodiments of the present disclosure, the lamination interlayer may have a thickness of at least 0.4 mm, such as at least 0.6 mm, such as at least 0.7 mm.

In one or more embodiments of the present disclosure, the covering body extends into the lamination interlayer. In one or more embodiments of the present disclosure, the lamination interlayer has a thickness of at least 0.4 mm, such as at least 0.6 mm, such as at least 0.7 mm.

This may provide that the covering body extends into the lamination interlayer, but not into the lamination glass sheet. This may e.g. be advantageous in relation to manufacturing of the VIG unit.

In some embodiments of the present disclosure, the surface of the covering body which faces away from the seal material is flush with or below the second surface of the first glass sheet after said cooling of the softened seal material so as to seal the evacuated gap.

In one or more embodiments of the present disclosure, the surface of the covering body which faces away from the seal material is at a level below the second surface of the first glass sheet after said cooling of the softened seal material so as to seal the evacuated gap, and wherein the lamination interlayer extends into the through hole, such as into a larger diameter portion of the through hole.

In one or more embodiments of the present disclosure, the first glass sheet and/or the second glass sheet may be a tempered glass sheet such as a thermally tempered glass sheet.

This may provide a stronger VIG unit and/or enable larger distance between adjacent support structures in the evacuated gap. It may also allow use of thinner first and/or second glass sheets. It may also allow for a larger distance between the support structures.

In one or more embodiments of the present disclosure, the covering body comprises or consist of a glass body such as a structural glass body.

In other embodiments, the covering body may comprise or consist of a metal body such as a structural metal body.

In one or more embodiments of the present disclosure, at the final vacuum insulated glass unit, the surface of the covering body which faces away from the gap is configured to be arranged less than 1 mm, such as less than 0.6 mm, for example less than 0.4 mm, from a plane defined by the second major surface of the first glass sheet, and/or
wherein the surface of the covering body which faces away from the gap and the sealing material is arranged substantially flush with or below the second major surface of the first glass sheet.

In one or more embodiments of the present disclosure, said providing of the vacuum insulated glass (VIG) unit assembly comprises heating the peripheral edge seal material, such as a solder glass edge seal material, so as to soften the a peripheral edge seal material, and cooling the peripheral edge seal material so as to solidify the softened peripheral edge seal material to obtain an (e.g. permanent) airtight peripheral edge seal.

The vacuum insulated glass unit assembly with the cover may in some embodiments be heated in a furnace. The cover comprising the solidified seal material may easily be placed before the VIG unit assembly is heated in the furnace.

In one or more embodiments of the present disclosure, the method comprises heating the vacuum insulated glass unit assembly in a heating oven/furnace chamber to a temperature above 200°C, such as above 280°C, such as above 320°C, such as by means of convection heating and/or conduction heating, prior to said heating the solidified seal material by means of a heater so as to soften the solidified seal material.

In one or more embodiments of the present disclosure, said heating in the furnace / heating oven chamber may be configured to soften the peripheral edge seal material.

In one or more embodiments of the present disclosure, said heating in the heating oven chamber heats the peripheral edge seal material to a temperature above the glass transition temperature of the peripheral edge seal material.

In one or more embodiments of the present disclosure, said providing of the cover comprises manufacturing the cover, wherein said manufacturing of the cover comprises the steps of:
- providing one or more covering body workpieces, such as one or more covering body discs,
- applying a seal material comprising a glass solder material to the one or more provided covering body workpieces,
- arranging the one or more, such as a plurality of, covering body workpieces with the applied seal material in a working space,
- heating at least the applied seal material in the working space by means of a heater, wherein said heating is provided so as to soften the applied glass solder material so as to provide an outgassing of the applied glass solder material,
- cooling the heated covering body workpiece and applied glass solder material so as to solidify the glass solder material.

This may provide the cover that may be arranged to cover the through hole as e.g. previously described.

In one or more embodiments of the present disclosure, the working space may be a vacuum chamber, and wherein the pressure in the vacuum chamber is reduced by means of a pump during at least said heating of the applied glass solder material.

In one or more embodiments of the present disclosure, said providing of the cover comprises picking or ejecting, such as dropping, said cover comprising the covering body and the solidified seal material.

In one or more embodiments of the present disclosure, the amount of binder material in the solidified seal material is below 5 wt%, such as below 2 wt%, such as below 1 wt%. In one or more embodiments of the present disclosure, the amount of solvent in the solidified seal material is below 4 wt%, such as below 2 wt%, such as below 1 wt%.

The present disclosure moreover relates, in a second aspect, to a method of manufacturing one or more covers. The one or more covers may be configured for subsequent use during sealing of an evacuated gap of a vacuum insulated glass unit. The method comprises providing one or more covering body workpieces. The provided one or more covering body workpieces comprises a seal material comprising a glass solder material. The seal material is arranged at a surface of the one or more covering body workpieces. The one or more covering body workpieces is/are arranged in a working space. The seal material is heated in the working space to a target temperature by means of a heater. The one or more heated covering body workpieces and seal material is/are then cooled so as to solidify the seal material. One or more covers is/are obtained from the one or more cooled covering body workpieces.

The heating of the seal material in the working space to the target temperature by means of the heater may in embodiments of the present disclosure provide an outgassing of the glass solder material of the seal material, also referred to as a pre-outgassing in the present document.

Providing a pre-outgassing of a seal material comprising glass solder material during cover manufacturing before the cover is used at a VIG unit assembly may provide a cover that enables an improved seal of an evacuated gap of a VIG unit. The pressure in the gap of a VIG unit may be reduced to below 10⁻² mbar, such as 10⁻³ mbar or below, and then the gap is sealed in order to provide a VIG unit with e.g. good heat insulation performance. A substantial outgassing of the seal material of the cover during the sealing of the evacuated gap may be undesired as it may possibly provide the risk of a pressure increase in the gap during gap sealing. The outgassing may be caused by e.g. burnout of binder material and/or solvent material in the seal material. Providing a pre-outgassing of the seal material of the cover may help to reduce or prevent such issues.

The heating of the seal material during cover manufacturing may additionally or alternatively help to provide a more dense seal material comprising the glass solder material. This may be the case for substantially the entire seal material mass at the respective cover, for example the entire mass of the glass solder material of the seal material.

The manufacturing of the cover according to embodiments of the present disclosure may also reduce the risk of so called foaming when using the cover at a VIG unit assembly for sealing an evacuated gap.

The cover may also provide advantages in relation to placing of the cover at the VIG unit assembly, as the seal material adhere/attaches to the covering body surface.

The seal material at the workpiece may comprise or be a solder glass material, such as a low melting point solder glass material.

The seal material may comprise binder material and/or solvent material, at least prior to said heating to soften the solder material.

The target temperature may be predefined.

In one or more embodiments of the present disclosure, said obtaining of one or more covers from the cooled covering body workpieces may comprise providing a plurality of covers from a single covering body workpiece of the one or more covering body workpieces, such as by means of a cutter, such as by means of a laser. Each cover obtained from said covering body workpiece comprises said solidified glass solder material. Hence, a plurality of covers may be obtained from a single workpiece after the workpiece has been heated in the working space. This may e.g. provide a faster and/or efficient and/or cost efficient manufacturing of covers for subsequent use during sealing of an evacuated gap to obtain a vacuum insulated glass unit.

It is generally understood that in some embodiments of the present disclosure, the covering body workpiece may comprise or consist of a glass body such as an annealed glass body or a chemically hardened glass body, or it may comprise or consist of a metal body.

For example, such materials may be more easy to cut after the seal material has been solidified.

Annealed glass material may also be advantageous to work with compared to e.g. thermally tempered glass sheets when working with smaller parts. Annealed glass material can also resist a higher temperature for a longer time when compared to tempered glass sheets.

It is generally understood that glass material such as the solder glass material and/or a covering body comprising glass material such as annealed glass may comprise an advantageous coefficient of thermal expansion (CTE), which may be advantageous to match with the VIG unit glass sheet comprising the evacuation hole.

It is generally understood that glass material such as the solder glass material and/or a covering body comprising glass material such as annealed glass may comprise an advantageous coefficient of thermal expansion (CTE), which may be advantageous to match with the VIG unit glass sheet comprising the evacuation hole.

In one or more embodiments of the second aspect, the seal material at one or more of the one or more covering body workpieces may comprise or consist of a continuous layer of seal material, such as a continuous layer of the glass solder material, A plurality of covers may be obtained, such as cut, from the workpiece so that each of the obtained covers comprises a part of the covering body workpiece and a seal material originating from the continuous layer of seal material.

In one or more embodiments of the second aspect, the seal material at one or more of the one or more covering body workpieces may comprise or consist of a plurality of discretely arranged portions of seal material which are distributed across a surface of the workpiece, and wherein a plurality of covers are obtained, such as cut, from the workpiece so that each of the obtained covers comprises a part of the covering body workpiece and a solidified seal material, wherein the solidified seal material of the cover comprises at least one of said discretely arranged solidified portions of the seal material. This may e.g. provide a fast and/or cost efficient manufacturing of covers.

In one or more embodiments of the second aspect, said providing of the one or more covering body workpieces may comprise providing a plurality of individual covering body workpieces, wherein each individual covering body workpiece comprises a portion of said seal material to be heated. In some embodiments, said individual covering body workpieces may each be configured to constitute a cover, such as a single cover, when the seal material has been solidified.

This may e.g. provide a more cost efficient and/or fast cover manufacturing. Providing a plurality, such as at least 5, at least 20, at least 50 or at least 100 work pieces in the working space, such as a working chamber, such as in a vacuum chamber, at once may provide a more cost efficient and/or fast cover manufacturing.

In one or more embodiments of the second aspect, said heating of the applied glass solder material may be provided so as to soften and at least partly liquify the applied glass solder material, such as so as to provide said outgassing. This may e.g. provide a dense seal material and/or provide an improved/increased outgassing of materials from the seal material.

In some embodiments of the present disclosure, the seal material on the workpiece may be hard, such as dried out seal material. The seal material may thereafter be heated to soften the solder glass material in the working space. In other embodiments of the present disclosure, the seal material on the workpiece may be a paste like substance. The seal material may thereafter be heated first to dry out the seal material and thereafter to soften the solder glass material in the working space.

In one or more embodiments of the second aspect, said heating of the applied seal material so as to soften the seal material comprises heating to a temperature above 200°C, such as above 300°C, such as above 350°C.

In one or more embodiments of the second aspect, said heating of the applied seal material so as to soften the seal material comprises heating to a temperature between 200°C and 450°C, such as between 300°C and 400°C, such as between 320°C and 370°C.

In one or more embodiments of the second aspect, said working space is a vacuum chamber, and wherein the pressure is reduced in the vacuum chamber, such as by means of a pump, such as at least while said applied glass solder material is heated in the vacuum chamber.

The inventors have found that manufacturing of a cover where the seal material is heated and softened provides an improved outgassing from the material and a more dense resulting seal material for later use to seal an evacuated gap of a VIG unit. This may provide an improved cover. The inventors have also seen indications that it may be advantageous to outgas the seal material in a vacuum chamber while subjected to a reduced ambient pressure in the vacuum chamber.

In one or more embodiments of the second aspect, reducing of the pressure in the vacuum chamber comprises reducing the pressure in the vacuum chamber to a pressure below 500 mbar, such as below 100 mbar, such as below 10 mbar. In one or more embodiments of the present disclosure, said reducing of the pressure in the vacuum chamber comprises reducing the pressure in the vacuum chamber to a pressure between 10 ⁻³ millibar and 500 millibar, such as between 10 ⁻² millibar and 100 millibar, or such as between 10 ⁻² millibar and 800 millibar.

In one or more embodiments of the present disclosure, the method comprises equalizing said pressure in the vacuum chamber, such as during or after said cooling.

This may provide a sufficient reduced pressure to enable providing an improved cover.

In one or more embodiments of the second aspect, said heating comprises heating the glass solder material of the cover to a temperature above the rated glass transition temperature of the glass solder material.

In one or more embodiments of the second aspect, the heater comprises a conduction heater and/or a convection heater. In one or more embodiments of the second aspect, the heater heats a conduction heating part, such as a base, configured to heat the one or more covering body workpieces so that the one or more covering body workpieces heats the seal material.

The conduction heating part may enable providing an advantageous and/or cost efficient, controlled heating of the seal material. It may also be advantageous to use conduction heating in a vacuum chamber.

A conduction heater or a convection heater may e.g. enable providing a controlled and/or efficient heating of the seal material in the working space. Additionally or alternatively, it may provide a more simple and/or cost efficient solution.

In one or more embodiments of the second aspect, the heater comprises a radiation heater, such as a laser.

This may e.g. enable providing a more controlled and/or adapted heating of the seal material. It may also be advantageous to use radiation heating in a vacuum chamber.

In one or more embodiments of the second aspect, the heater comprises a conduction heating part, such as a base, configured to heat the covering body so that the covering body heats the seal material.

This may provide advantageous and/or cost efficient, controlled heating of the seal material. It may also be advantageous to use conduction heating in a vacuum chamber.

In one or more embodiments of the second aspect, the conduction heating part heats the covers, such as to the target temperature, so as to provide said softening of the seal material.

In embodiments, a combined heating by means of radiation heating and conduction heating may be provided in order to heat the seal material at the work pieces in the working space.

In one or more embodiments of the second aspect, the temperature of the seal material may be increased, such as with a predefined heat increase rate, during the heating time until a predefined target temperature is reached.

In one or more embodiments of the second aspect, the temperature of the seal material is increased in the working chamber with a heat increase rate of less than 2 °C/minute, such as less than 1 °C/minute or less than 0.7 °C/minute during the heating time until the target temperature is reached.

The inventors have seen indications that a slow heating of the seal material, such as a glass solder frit material, may be advantageous in order to obtain covers with solidified seal material having advantageous properties. This may advantageously, in further embodiments, be combined with evacuation in a vacuum chamber as described according to various embodiments of the present disclosure.

A low heat increase rate of the seal material may accommodate extraction/release of solvent and binder from the seal material arranged at the covering body surface. It may additionally maintain a - so to say - open structure in the seal material to enable improved material outgassing.

In one or more embodiments of the second aspect, wherein said heat increase rate is provided over at least 50%, such as over at least 70% or over at least 95% of said heating time.

In one or more embodiments of the second aspect, said heat increase rate is provided at least over 50%, such as 70% or 95% of said heating time (Ht21).

In one or more embodiments of the second aspect, said heat increase rate is provided at least over the first 50%, such as the first 70% or the first 95% of said heating time.

In one or more embodiments of the second aspect, the heating time before the seal material reaches the target temperature is at least 3 hours, such as at least 5 hours, such as at least 8 hours.

In one or more embodiments of the second aspect, the temperature of the seal material is increased with a heat increase rate of between 0.1 °C/minute and 5 °C/minute, such as between 0.1 °C/minute and 2 °C/minute, such as between 0.3 °C/minute and 0.7 °C/minute.

In one or more embodiments of the second aspect, the entire seal material, such as the full mass of the seal material is heated to said target temperature, such as wherein said heating comprises heating the entire glass solder material of the cover to a temperature above the rated glass transition temperature of the glass solder material.

In one or more embodiments of the second aspect, the heating in the working space, also called pre-heating in the present document, may comprise heating the glass solder material of the cover to a temperature above the rated glass transition temperature of the glass solder material.

In one or more embodiments of the second aspect, the heating in the working space, also called pre-heating in the present document, may comprise heating the glass solder material of the cover to a temperature above the rated melting temperature of the glass solder material. In some embodiments of the present disclosure, the entire seal material, such as the full mass of the seal material at the covering body workpiece(s) may be heated in the working space to the target temperature.

In some embodiments of the present disclosure, the heating in the working space may comprise heating the entire glass solder material of the cover to a temperature above the rated glass transition temperature Tg of the glass solder material.

In some embodiments of the present disclosure, the heating in the working space may comprise heating the entire glass solder material of the cover to a temperature above the rated melting temperature Tm of the glass solder material.

In one or more embodiments of the second aspect, the amount of binder material in the solidified seal material is below 5 wt%, such as below 2 wt%, such as below 1 wt%. In one or more embodiments of the second aspect, the amount of solvent in the solidified seal material (22) is below 4 wt%, such as below 2 wt%, such as below 1 wt%.

In one or more embodiments of the second aspect, said heating by means of said heater reduces the amount of binder material in the seal material, such as by at least 10%, such as by at least 50%, such as by at least 85% when compared to the amount of binder material in the seal material before said heating by means of the heater.

In one or more embodiments of the second aspect, said heating by means of said heater reduces the amount of solvent material in the seal material by at least 40%, such as at least 80%, such as at least 95% when compared to the amount of solvent material in the seal material before said heating by means of the heater (60).

In one or more embodiments of the present disclosure, said providing of the one or more covering body workpieces may comprise applying the glass solder material to a surface of the provided one or more covering body workpieces.

The applied seal material may e.g. have been mixed with a solvent material so as to provide a paste-like texture of the applied solder material. This may enable providing a more controlled applying of the seal material. An outlet, such as a nozzle, may be used for applying the seal material.

In some embodiments, the seal material may e.g. be printed, such as 3D printed, onto the covering body surface. Solvent may or may not be present in the material during this process.

In some embodiments of the present disclosure, the seal material on the workpiece may be hard, such as dried out seal material. The seal material may thereafter be heated to soften the solder glass material in the working space. In other embodiments of the present disclosure, the seal material on the workpiece may be a paste like substance. The seal material may thereafter be heated first to dry out the seal material and thereafter to soften the solder glass material in the working space.

In one or more embodiments of the firs and/or second aspect, a softening temperature of the covering body workpiece may be is higher than a softening temperature of the applied glass solder material.

The covering body workpiece may remain substantially unsoftened during the VIG unit manufacturing.

In one or more embodiments of the second aspect, a surface roughness of the surface of the solidified seal material which faces away from the surface of the work piece is above 10 µm, such as above 25 µm, such as above 35 µm, such as wherein said surface roughness is the Ra or Rz surface roughness parameter, preferably the Ra parameter.

In one or more embodiments of the second aspect, the surface roughness of the surface of the solidified seal material which faces away from the surface of the work piece is between 10 µm, and 150 µm such as between 25 µm and 100 µm, such as between 35 µm and 75 µm,
such as wherein said surface roughness is the Ra or Rz surface roughness parameter, preferably the Ra parameter.

The surface roughness may be defined along a sampling length corresponding to the full length, such as the diameter, of the solidified seal material at the top of the solidified seal material. This may in practice be defined along an envisaged circle which is concentric with the solidified solder material and which has a diameter providing that the circle is arranged substantially midways between the outer and inner periphery of the solidified solder material. The surface roughness may e.g. be determined by means of a profilometer or a laser scanner.

The Ra surface roughness parameter may define, within the sampling length, the average roughness of the solidified seal material surface, e.g. including the deviations from the mean line.

The Rz surface roughness parameter may define the difference between the highest peak and lowest valley within the sampling length. It may define the maximum height of the profile.

Surface roughness may be defined according to ISO 21920-2.

In one or more embodiments of the second aspect, said surface roughness of the surface of the solidified seal material is obtained as a result of said heating of the seal material of the cover in the working space by means of the heater, and the subsequent cooling of the softened seal material so as to solidify the softened seal material.

In one or more embodiments of the second aspect, said surface roughness of the seal material surface is the surface roughness over at least 90%, such as at least 95%, such as at least 98% of the surface area of the solidified seal material surface which is unbonded to the surface of the covering body.

In one or more embodiments of the second aspect, said solidified seal material has a height, such as a maximum height, of less than 0.6 mm, such as less than 0.4 mm, such as less than 0.3 mm. This may e.g. provide a more space saving solution and/or a cost efficient solution. It may also provide a solution that enables good sealing of the evacuated gap.

In one or more embodiments of the second aspect, the height, such as local maximum height, of the solidified seal material varies less than 0.2 mm, such as less than 0.1 mm, such as less than 0.05 mm, for example less than 0.03 mm over the entire extent of the seal material.

This may e.g. provide a more space saving solution and/or a more efficient sealing solution. The local maximum height may include variations caused by surface roughness of the seal material, or said local maximum height may exclude variations caused by surface roughness of the seal material. Said extent may be the longitudinal extent of the solidified seal material.

In one or more embodiments of the second aspect, surface roughness of the seal material surface is provided by means of protrusions at/in the surface of the seal material of the cover, wherein said protrusions are arranged staggered, such as substantially randomly, across the surface of the glass solder material.

In some embodiments, the staggered protrusions may provide that the one or more gas passages is/are non-straight, such as so that the protrusions may cause a deviation of the evacuated gas from a straight line during gas evacuation through the one or more gas passages.

In some embodiments, the staggered protrusions may be obtained by an initial heating of the seal material during a first firing of the seal material on the cover during cover manufacturing.

In one or more embodiments of the second aspect, the solidified seal material comprises or consist of a continuous ring of seal material, such as a continuous, annular ring of seal material. The ring of solidified seal material may be configured to encompass the through hole in an uninterrupted manner when the cover is arranged so that the covering body covers the through hole.

This may e.g. allow for reduction of seal material amount, it may enable a more space saving solution as the seal material may be thinner, it may provide a sealing solution with larger structural integrity and//or a uniform manufacturing result.

In one or more embodiments of the second aspect, the solidified seal material is in continuous, un-interrupted contact with, and continuously adheres to, the covering body, such as a covering body surface, over substantially the full extent, such as the full length, of the continuous ring of seal material.

It is generally understood that the cover provided in the method according to one or more embodiments of the first aspect may be a cover which is manufactured according to one or more embodiments of the second aspect.

The present disclosure moreover relates, in a third aspect to use of a cover according to any of items 50-81 and/or according to one or more embodiments of the second aspect for covering and sealing of an evacuation hole in a glass sheet of a vacuum insulated glass unit so as to seal an evacuated gap of the vacuum insulated glass unit.

### Description of the drawings

The present disclosure will in the following be described in greater detail with reference to the accompanying drawings:
- Fig. 1: illustrates a schematic view of a VIG unit assembly and a cover, according to various embodiments of the present disclosure,
- Fig. 2: illustrates a schematic view of VIG unit manufacturing, according to various embodiments of the present disclosure,
- Fig. 3: illustrates a schematic view of a VIG unit assembly and a cover, where the cover supports on a step surface, according to embodiments of the present disclosure,
- Fig. 4: illustrates a schematic view of a cover comprising seal material and a surface roughness providing gas passages, according to embodiments of the present disclosure,
- Figs. 4a-4b: illustrates schematically a cover according to various embodiments of the present disclosure,
- Fig. 5: illustrates schematically a VIG unit according to various embodiments of the present disclosure,
- Fig. 6: illustrates schematically a laminated VIG unit according to various embodiments of the present disclosure,
- Fig. 7: illustrates schematically a laminated VIG unit according to various embodiments of the present disclosure, where a covering body projects through a plane comprising a major surface of a glass sheet, and projects into a lamination interlayer,
- Fig. 8: illustrates schematically a laminated VIG unit according to various embodiments of the present disclosure, where a lamination layer extends into a larger diameter portion of a through hole,
- Fig. 9: illustrates schematically a VIG unit according to various embodiments of the present disclosure,
- Fig. 10: illustrates schematically a VIG unit according to various embodiments of the present disclosure, where a cover is placed on a major surface of a glass sheet so as to cover a single diameter through hole to seal an evacuated gap,
- Fig. 10a: illustrates schematically a laminated VIG unit according to various embodiments of the present disclosure, where a cover is placed on a major surface of a glass sheet, and where the cover is placed in a space between the major surface of the glass sheet and a lamination glass sheet,
- Fig. 11: illustrates schematically manufacturing of a through hole, according to embodiments of the present disclosure,
- Fig. 12: illustrates schematically a cross section of a surface roughness of a surface part of a VIG unit after permanent sealing of an evacuated gap, according to embodiments of the present disclosure,
- Fig. 13: illustrates schematically manufacturing of a plurality of covers in a working space, according to embodiments of the present disclosure,
- Fig. 14: illustrates schematically heating of covers during cover manufacturing, according to various embodiments of the present disclosure,
- Fig. 15: illustrates schematically a flow chart relating to VIG unit manufacturing, according to embodiments of the present disclosure,
- Fig. 16: illustrates schematically a flow chart relating to manufacturing of a cover for sealing an evacuated VIG unit gap, according to embodiments of the present disclosure,
- Fig. 17: Fig. illustrates schematically evacuation of a gap, where gas leaves through a gas passage, according to embodiments of the present disclosure,
- Fig. 18: illustrates a grayscale image of a test example of a surface of a solidified seal material at a cover body surface, according to embodiments of the present disclosure,
- Figs. 19A-19E: illustrate grayscale images of a successful test of using a cover with the solidified seal material, according to embodiments of the present disclosure,
- Figs. 20A-20B: illustrate microscopic images of a test of a step surface, according to embodiments of the present disclosure,
- Fig. 21: illustrates a microscopic image of a test sample comprising a glass sheet with a stepped through hole which is covered by a cover,
- Fig. 22: illustrates a manufacturing of a vacuum insulated glass (VIG) unit, according to further embodiments of the present disclosure,
- Fig. 22a: illustrates a pushing body according to embodiments of the present disclosure, and
- Figs. 23A-23D: illustrates various embodiments of a pushing body configured to be arranged between a glass sheet surface and a pushing part so as to push on a cover, according to various embodiments of the present disclosure,
- Figs. 24A and 25A: illustrates various embodiments of the present disclosure wherein a workpiece comprising seal material for a plurality of covers is heated in a workspace, according to various embodiments of the present disclosure,
- Figs. 24B and 25B: : illustrates obtaining a plurality of covers from a single workpiece, according to various embodiments of the present disclosure,
- Figs. 24C and 25C: : illustrates covers obtained from a single workpiece, according to various embodiments of the present disclosure, and
- Fig. 26: : illustrates a cover comprising a continuous layer of seal material, where the cover is used for sealing an evacuated gap, according to embodiments of the present disclosure.

### Description

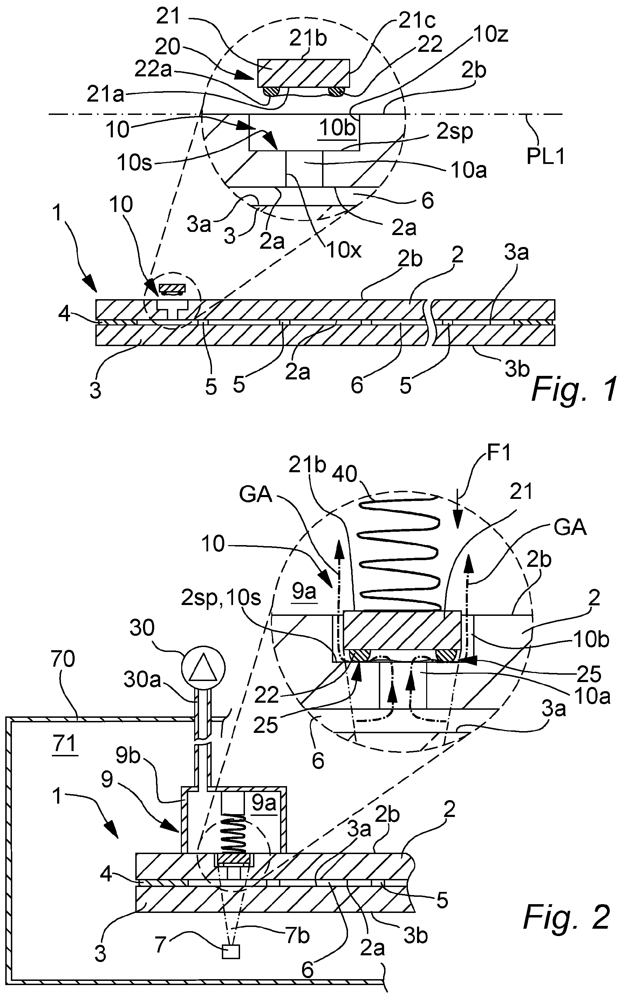

Fig. 1 illustrates schematically a vacuum insulated glass (VIG) unit assembly 1 according to embodiments of the present disclosure. The VIG unit assembly 1 comprises a first glass sheet 2 and a second glass sheet 3. In some embodiments, the first 2 and/or second glass sheet 3 may be a tempered glass sheet 2 such as a thermally tempered glass sheet. In other embodiments, the tempered glass sheets may be chemically tempered/hardened glass sheets. In still other embodiments, the glass sheet(s) 2, 3 may be non-tempered / un-tempered.

A plurality of support structures 5 a distributed in a gap 6 of the assembly 1. The gap 6 is arranged between a first major surface 2a of the first glass sheet 2 and first major surface 3a of the second glass sheet 3. In some embodiments, more than 300, such as more than 500, such as more than 1000, or even more than 2000 support structures may be distributed in the gap 6, e.g. in a predefined distribution pattern. The mutual distance between adjacent support structures 5 may be between 20 mm and 70 mm, such as between 30 mm and 50 mm, such as between 35 mm and 45 mm. This distance may be determined based on the glass sheet 2,3 type and/or thickness. For example, thermally tempered glass sheets are stronger and may allow for a larger distance between the support structures 5.

In some embodiments, the first glass sheet 2 and/or the second glass sheet 3 has/have a thickness TH1 between 2 mm and 5 mm, such as between 3 mm and 4 mm, such as between 3.5 mm and 4.5 mm (both endpoints included). The first 2 and second 3 glass sheets 2, 3 may in some embodiments have the same thickness TH1 or may in other embodiments be of different thickness TH1.

A peripheral edge seal 4 is configured to seal the gap 6. The edge seal 4 material may e.g. comprise metal solder or glass solder material such as glass frit based solder material, such as a low melting point solder glass material.

The distance between the surfaces 2a, 3a may in some embodiments be lower than 0.4 mm, such as lower than 0.3 mm, such as 0.2 mm or lower. The spacers/ support structures are arranged to maintain the gap 6 when the gap 6 is evacuated. The spacers / support structures 5 may e.g. comprise glass material spacers, metal spacers and/or polymer spacers.

The first glass sheet 2 comprises a through hole 10. The through hole 10 extends between the first major surface 2a and a second, oppositely directed, major surface 2b of the first glass sheet 2. Thereby, gas 6 in the gap can be evacuated through the through hole 10.

In fig. 1 and several of the figures described further below, the through hole 10 is a stepped through hole. The stepped through hole 10 comprises a smaller diameter portion 10a and a larger diameter portion 10b. The larger diameter portion 10b is arranged proximate the second major surface 2b of the first glass sheet 2. The smaller diameter portion 10a is arranged proximate the first major surface 2a of the first glass sheet, and proximate the gap 6.

A step surface 10s is arranged between the larger diameter portion 10b and the smaller diameter portion 10a.

The larger diameter portion 10b and the smaller diameter portion 10a may in embodiments of the precent disclosure be circular holes. The larger diameter portion 10b and the smaller diameter portion 10a may in embodiments of the precent disclosure be substantially concentric, annular holes.

A first wall surface 10x, such as an annular wall surface, encloses/encircles the smaller diameter portion 10a. This first wall surface 10x extends between the glass sheet surface 2a and the step surface 10s. A second wall surface 10z, such as an annular wall surface, encloses/encircles the larger diameter portion 10a. This second wall surface 19z extends between the step surface 10s and the glass sheet surface 2b. The step surface 10s extends between the wall surfaces 10x, 10z.

The step surface 10s may as illustrated in fig. 1 be shaped so as to generally be substantially parallel to a major surface 2a, 2b of the same glass sheet 2. In other embodiments (not illustrated), the step surface may be shaped to incline, e.g. towards the smaller diameter part. The smaller diameter portion 10a and/or the larger diameter portion 10b may have a substantially constant width such as constant diameter. In other embodiments, the smaller diameter portion 10a and/or the larger diameter portion 10b may not have a substantially constant width such as diameter.

A cover 20 is provided. The cover 20 comprises a covering body 21 and a solidified seal material 22. The solidified seal material 22 comprises glass solder material which is attached to a surface 21a of the covering body 21. This may be provided during manufacturing of the cover. Various embodiments of the present disclosure relating to manufacturing the cover 20 are described further below. The glass solder material 22 may comprise or be a low melting point solder glass material.

In some embodiments, said providing of the cover 20 may comprise placing the cover 20 onto the first glass sheet 2 to cover the through hole. In some embodiments, said placing of the cover may comprise picking and placing or ejecting, such as dropping, said cover 20 comprising the covering body 21 and the solidified seal material 22 at the desired position at the first glass sheet to cover the through hole 10.

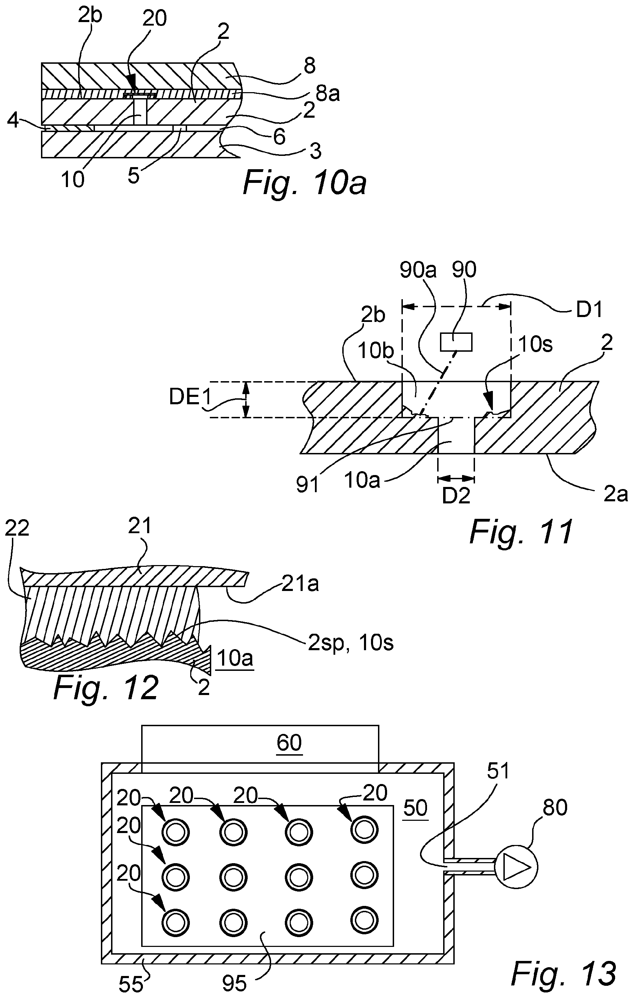

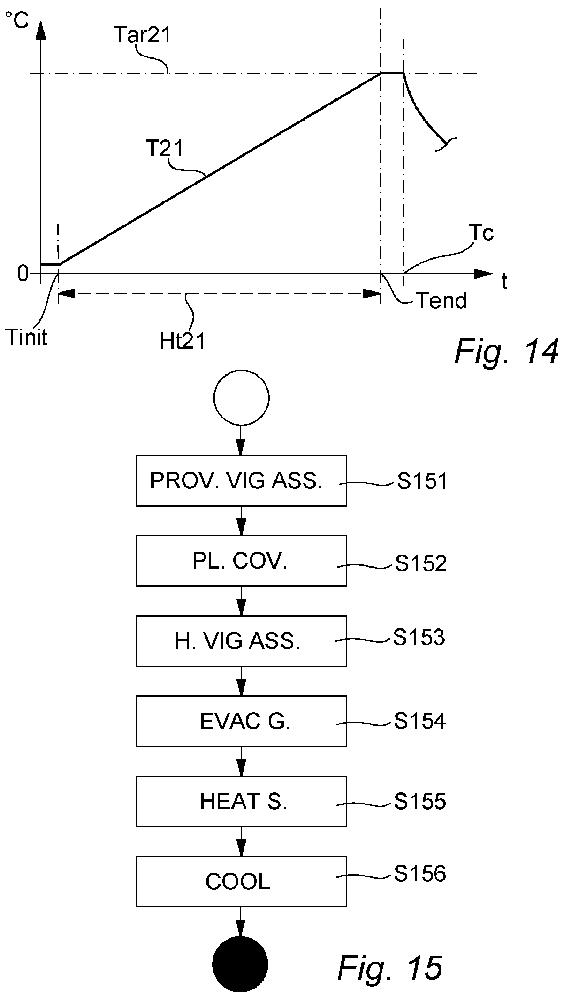

In some embodiments, said providing of the cover 20 may comprise a manufacturing of the cover 20 prior to placing the cover 20 at the first glass sheet 2 of the VIG unit assembly 1. Various embodiments of said manufacturing of the cover 20, according to embodiments of the present disclosure, are described in more details further below, e.g. in relation to figs. 13 and/or 14.

The covering body comprises first and second surfaces 21a, 21b. These may be parallel. A side surface 21c extend between the first and second surfaces 21a, 21b. The covering body 21 may be made from e.g. metal or glass, such as annealed glass. The material of the covering body 21 may be selected based on the coefficient of thermal expansion of the covering body 21. In some embodiments, it may be preferred that the covering body 21 material has substantially the same coefficient of thermal expansion as the coefficient of thermal expansion of the first glass sheet 2. For example, the body 21 may be made from a glass material having a coefficient of thermal expansion substantially corresponding to the coefficient of thermal expansion of the first glass sheet 2.

The covering body 21 may comprise or consist of a structural body such as a structural glass body or a structural metal body.

The covering body may be disc shaped, polygonal shaped or the like. The outer boundary of the covering body 21 defined by the side surface 21c may or may not, in some embodiments of the present disclosure, be of substantially the same shape as the shape of the larger diameter portion 10b.

The cover 20 is arranged so that the solidified seal material 22 is placed between a surface part 2sp of the first glass sheet 2 and the covering body 21. The covering body 21 hereby covers at least a part 10a of the through hole 10.

In fig. 1, The arranging of the cover 20 comprises arranging the solidified seal material 22 opposite to, such as so as to support on, the step surface 10s (see also fig. 2). Thereby, the covering body 21 is arranged in the larger diameter portion 10b, covers the smaller diameter portion 10a, and overlaps the step surface 10s around the smaller diameter hole 10a. The side surface 10c is placed opposite to the side surface 10bs of the first glass sheet 2 which encloses the larger diameter portion 10b. The side surface 10bs of the first glass sheet 2 faces the side surface 21c of the covering body 21.

Fig. 2 illustrates schematically a manufacturing of a vacuum insulated glass (VIG) unit by means of a VIG unit assembly 1, according to embodiments of the present disclosure.

The VIG unit assembly 1, such as a VIG unit assembly described above and/or below, is placed in a heating oven / furnace 70 chamber 71. The vacuum insulated glass VIG unit assembly 1 is then heated in the heating oven to a temperature above 200°C, such as above 280°C, such as above 320°C. In some embodiments, the peripheral edge seal 4 material is heated in the heating oven 70 to a temperature above the glass transition temperature of the peripheral edge seal 4 material.

The heating oven / furnace 70 may e.g. comprise a convection heating oven and/or a conduction heating oven. In some embodiments, this heating may be provided so as to soften the peripheral edge seal 4. After cooling of the heated and softened edge seal 4 material, the edge seal 4 will provide a hermetic, airtight edge seal 4 to seal the gap 6.

In some embodiments, radiation heating such as laser heating and/or infrared radiation heating may be used for heating and softening the edge seal material 4 material. This is however not illustrated in the figures. This radiation heating may in some embodiments be provided in addition to heating by means of the furnace 70, or as an alternative to e.g. convection heating.

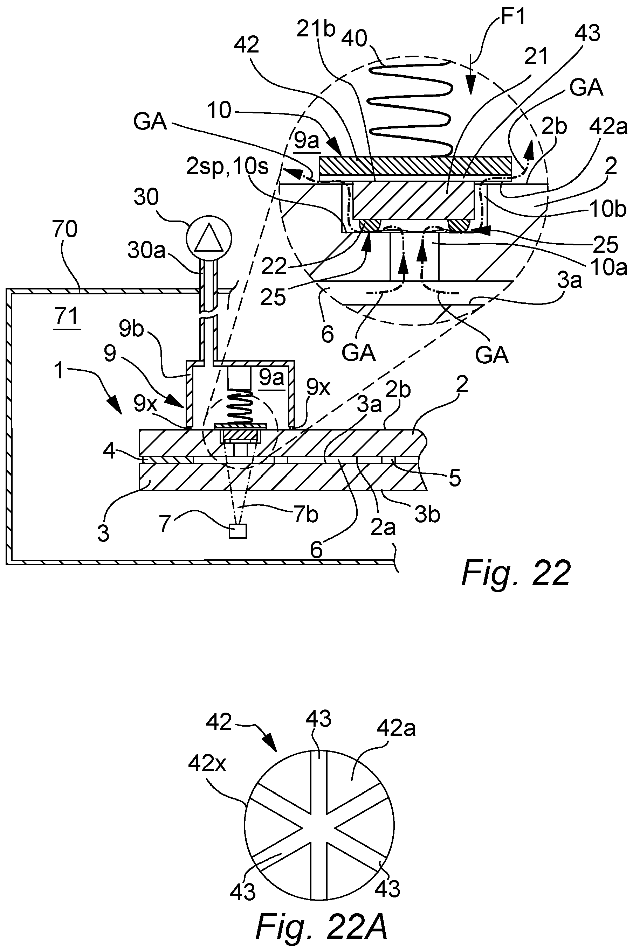

An evacuation cup 9 is arranged on the second surface 2b of the first glass sheet 2. In the illustrated example, this is provided while the VIG unit assembly is placed in the heating oven / furnace 70 chamber 71. The evacuation cup 9 covers the through hole 10 and is in tight contact with the surface 2b. In some embodiments, one or more gaskets (not illustrated, see fig. 22, ref. 9x), such as one or more graphite gaskets, may be used between the cup 9 housing 9a and the surface 2b so as to provide improved air tightness.

The interior cavity 9a of the cup 9 housing 9b is in fluid communication with a pump 30, e.g. through a piping 30. In some embodiments, the same pump 30 may be in fluid communication with a cup cavity 9a of a plurality of evacuation cups (not illustrated) by means of a piping system so as to provide simultaneous evacuation of a plurality of gaps of different VIG unit assemblies 1 arranged in the furnace 70 chamber 71.

The evacuation of the gap 6 by means of the pump 30 provides that gas GA, such as air, in the gap 6 is evacuated through the through hole 10 and out of the cup cavity through the piling 30a.

The gap 6 evacuation by means of the pump 30 may in some embodiments be provided for at least 10 minutes, such as at least 20 minutes or at least 30 minutes before the evacuated gap 6 is sealed to provide a VIG unit.

As can be seen in fig. 2, the evacuation of the gap 6 by means of the pump 30 may in some embodiments of the present disclosure comprise that the gas GA evacuated from the gap 6 is evacuated through the through hole 10 and one or more gas passages 25 arranged between the surface part 2sp, 10s of the first glass sheet 2 and a surface 22a of the solidified seal material 22 which faces said surface part 2sp, 10s of the first glass sheet 2. Various embodiments hereof are described in more detail further below.

In some embodiments, the heating and softening of the peripheral edge seal 4 material may be provided while the evacuation cup 9 evacuates the gap 6, thereby providing a clamping of the peripheral edge seal 4 material by means of a pressure difference between the gap 6 and the exterior of the vacuum insulated glass unit assembly 1. This may help to squeeze and deform the peripheral edge seal material 4 when it has been sufficiently heated in the furnace chamber 71.

When the peripheral edge seal 4 is sufficiently cooled, and the gap 6 is sufficiently evacuated, such as to a reduced pressure below 10⁻² mbar, such as below 10⁻³ mbar, the solidified seal material 22 of the cover 20 is heated by means of a heater 7 so as to soften the solidified seal material, thereby providing that the softened seal material 22 adhere to the surface part 2sp, 10s of the first glass sheet 2 around the through hole 10.

The heater 7 may in some embodiments comprise a radiation heater for providing a radiation heating beam 7a for heating the seal material 22 of the cover. In some embodiments, the radiation heater 7 may comprise or be a laser providing a laser beam 7a.

In some embodiments, the heating beam 7a may have a beam size that can cover and heat the entire surface seal material 22 of the cover 20 (that can be illuminated by the beam 7a) at once. In other embodiments, the heating beam 7a may comprise a laser beam 7a that is moved so as to revisit and heat the same area of the seal material 22 of the cover 20 a plurality of times, such as at least ten times, for example at least 40 times, such as at least 80 times, e.g. within 1 second, such as within 3 seconds or within 10 seconds to assure even seal material temperature increase.

In some embodiments, the covering body 21 may be heated by means of the heated seal material 22. Additionally or alternatively, in some embodiments, the covering body 21 may be configured to absorb energy from the heating beam 7a so as to heat the covering body 21. In some embodiments hereof, the covering body may comprise a layer of material or may comprise a material that is configured to absorb energy from the beam 7a so as to heat the covering body.

In fig. 2, the second glass sheet 3 is placed between the radiation heater 7 and the seal material 22 of the cover 20. The heater 7 is placed below the VIG unit assembly 1. Hereby, the seal material 22 of the cover 20 is heated by means of the heating beam which is radiated through the second glass sheet 3.

In some embodiments, the heating of the solidified seal material 22 of the cover 20 by means of the heater so as to soften the solidified seal material 22 may comprise heating the seal material 22 to a temperature above the rated glass transition temperature Tg of the seal material 22.

In some embodiments of the present disclosure, said heating by means of the heater 7 so as to soften the solidified seal material 22 may comprise heating the glass solder material 22 of the cover 20 to a temperature above the rated melting temperature Tm of the glass solder material 22.

When the seal material 22 has been sufficiently heated and is vetted to/bonds to also the surface 10s, 2sp of the first glass sheet 2 continuously around the smaller diameter portion 10a, A cooling the softened seal material 22 is provided so as to harden the softened seal material, thereby sealing the evacuated gap 6. The combination of the body 21 and the seal material 22 hence hermetically seals the through hole 10, thereby sealing the evacuated gap 6. The cooling of the seal material 22 may be provided by turning off the heating beam 7a which will cause the seal material 22 temperature to drop so that the seal material hardens/solidifies. The pump 30 may continue to provide pump out at least during the heating to soften the seal material 22 in order to be able to remove any gaseous species, if present, that may be released from the seal material 22 during the heating of the material. However, as explained in more details below, the seal material 22 and covering part 21 may have been subjected to a preheating and softening, and a subsequent cooling, before the cover 20 was placed to cover the through hole 10. This may result in a reduced amount of gaseous species being released during the heating by the heater 7 to seal the evacuated gap 6.

In some embodiments of the present disclosure, A clamping force/pushing force F1 may be provided by means of a clamping part 40 / pushing part 40 so as to force the covering body 21 towards said surface part 2sp 10s of the first glass sheet 2. This force F1 may be provided before, during and/or after said heating of the solidified seal material 22 so as to soften the solidified seal material. In fig. 2, the clamping part 40 may comprise a spring such as a coil spring or another suitable type of spring. In other embodiments of the present disclosure, the clamping part / pushing part may comprise a weight using gravity to provide the force F1.

In fig. 2, the clamping part 40 is arranged inside the evacuation cup 9. The clamping part 40 may be attached to the housing 9b of the evacuation cup 9. The evacuation cup may provide a counter force so that the clamping part 40 can provide the force F1. If the clamping part 40 comprises a spring, the spring may be deformed between the cup housing 9b and cover 20 and hence provides the force F1.

During the evacuation of the gap 6 by means of the pump 30, the surface 22a of the solidified seal material 22 may support on, such as directly support on, the surface part 2sp, 10s of the first glass sheet 2. The surface 22a of the solder material 22 which faces the surface 2sp of the first glass sheet 2, such as the step surface 10s, may be pressed towards the surface 2sa of the first glass sheet 2, such as towards the step surface 10s by means of the clamping part 40. When the seal material 22 is sufficiently heated, the clamping part may push the covering body 21 to move the covering body further into the hole 11 and may e.g. help to deform the seal material 22 which has been softened by the heater 7.

The clamping force / pushing force F1 may also help to keep the cover 20 at a desired cover space 10b over the through hole 10a, 10, such as during said evacuation of the gap 6 and/or during moving of the VIG unit assembly 1.

Further embodiments comprising using a clamping part / pushing part 40 are illustrated in figs. 22-23D, which are described in more details further below.

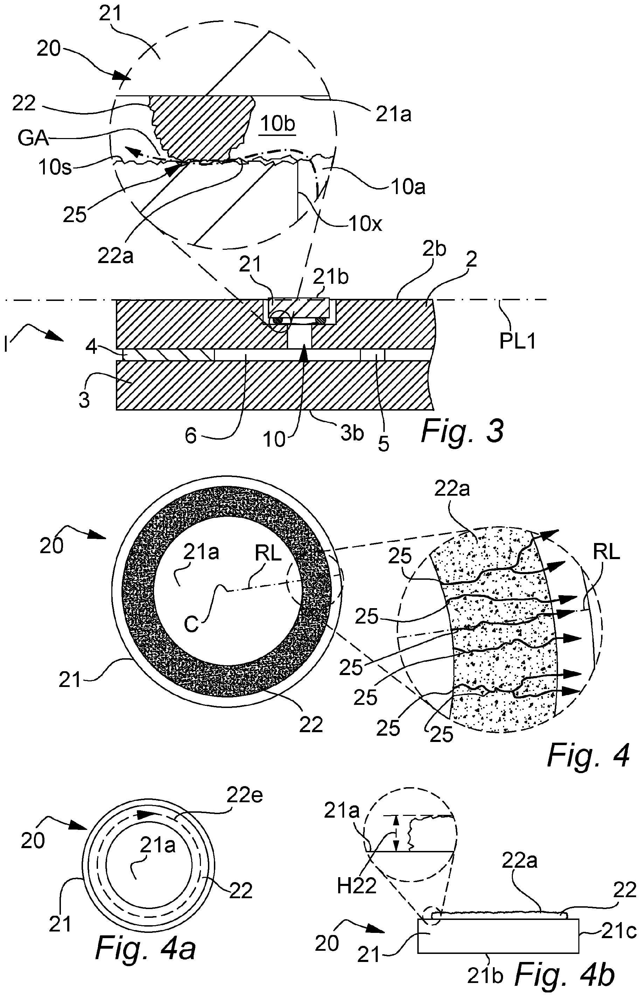

Figs. 3-3a illustrates schematically evacuation of the gap 6, where gas GA leaves through a gas passage between the seal material 22 surface 22a and the first glass sheet, according to embodiments of the present disclosure.

As mentioned above, the evacuation of the gap 6 by means of the pump 30 may in some embodiments of the present disclosure comprise that the gas GA evacuated from the gap 6 is evacuated through one or more gas passages 25 arranged between the surface part 2sp, 10s of the first glass sheet 2 and a surface 22a of the solidified seal material 22 which faces the surface part 2sp, 10s of the first glass sheet 2. In some embodiments.

In some embodiments of the present disclosure, at least 80%, such as at least 95%, such as at least 98%, of the evacuated gas GA from the gap 6 may be evacuated through said one or more gas passages 25.

In some embodiments of the present disclosure, the one or more gas passages 25 is/are provided as a consequence of a surface roughness of the surface 22a of the solidified seal material 22. Additionally or alternatively, said one or more gas passages 25 may be provided as a consequence of a surface roughness of said surface part 2sp of the first glass sheet 2, in this case the step surface 10s.

The surface roughness of the surface that the seal material 22 should bond to after heating of the seal material 22 of the cover 20 may be obtained as a consequence of drilling and/or laser cutting the through hole, such as the larger diameter portion 10b in the first glass sheet.

In some embodiments of the present disclosure, the surface roughness of the surface 22a of the solidified seal material 22 which faces the surface part 2sp, 10s of the first glass sheet 2 may be above 10 µm, such as above 25 µm, such as above 35 µm. This surface roughness may be the Ra surface roughness parameter or Rz surface roughness parameter, preferably the Ra surface roughness parameter.

In some embodiments of the present disclosure, the surface roughness of the surface 22a of the solidified seal material 22 which faces said surface part 2sp, 10s of the first glass sheet 2 may be between 10 µm, and 150 µm such as between 25 µm and 100 µm, such as between 35 µm and 75 µm or between 35 µm and 80 µm. Said surface roughness may be the Ra or Rz surface roughness parameter, preferably the Ra parameter.

The surface roughness may be defined along a sampling length corresponding to the full length, such as the diameter, of the solidified seal material at the top of the solidified seal material. This may in practice be defined along an envisaged circle which is concentric with the solidified solder material, and which has a diameter providing that the circle is arranged substantially midways between the outer and inner periphery of the solidified solder material. It is generally to be understood that surface roughness as mentioned in the present disclosure according to various embodiments of the present disclosure may e.g., be determined by means of a profilometer or a laser scanner. Surface roughness may be defined according to ISO 21920, such as ISO 21920-2.

The Ra surface roughness parameter may define, within a sampling length, the average roughness of the solidified seal material surface, e.g. including the deviations from the mean line.

The Rz surface roughness parameter may define the difference between the highest peak and lowest valley within the sampling length. It may define the maximum height of the profile.

In one or more embodiments of the present disclosure, the surface roughness of the surface part 2sp, 10s of the first glass sheet 2 which faces the solidified seal material 22 surface 22a may be above 10 µm, such as above 25 µm, such as above 35 µm. Said surface roughness may be the Ra or Rz surface roughness parameter, preferably the Ra parameter.

In one or more embodiments of the present disclosure, the surface roughness of the surface part 2sp, 10s of the first glass sheet 2 which faces the solidified seal material 22 surface 2a may be between 10 µm and 150 µm such as between 25 µm and 100 µm, such as between 35 µm and 80 µm. In one or more embodiments of the present disclosure, the surface roughness of the surface part 2sp, 10s of the first glass sheet 2 which faces the solidified seal material 22 surface 2a may be between 10 µm and 150 µm such as between 25 µm and 100 µm, such as between 45 µm and 80 µm. Said surface roughness may be the Ra or Rz surface roughness parameter, preferably the Ra parameter.

In some embodiments of the present disclosure, the surface 22a roughness of the seal material 22 is larger than the surface roughness of the glass sheet surface 2b.

It is understood that in some embodiments, the surface roughness of the surface 22a of the solidified seal material 22 may be obtained during cover 20 manufacturing, as a result of a first pre-heating of the seal material 22 of the cover 20 so as to soften, such as liquify, the seal material 22 and so as to obtain adherence to the covering body surface 21, and a subsequent pre-cooling of the softened seal material 22 so as to solidify the softened seal material 22. This pre-heating, such as pre-firing, of the seal material 22 may be provided prior to arranging the cover 20 at the VIG unit assembly. 11.

Said pre-heating of the seal material 22 may comprise heating the glass solder material 22 of the cover 20 to a temperature above the rated glass transition temperature Tg of the glass solder material 22. Embodiments of the manufacturing of the cover 20, according to embodiments of the present disclosure, are disclosed in more details further below.

Figs. 3 and 4 illustrates embodiments of the present disclosure, wherein the surface roughness of the solder material surface 22a is provided by means of protrusions at/in the surface of the glass solder material 22 of the cover 20. These protrusions may be arranged staggered, such as substantially randomly, across the surface of the glass solder material 22. Staggered protrusions of the solder material 22 and/or staggered protrusions of the surface 2sp, 10s of the first glass sheet may provide that the one or more gas passages 25 is/are non-straight. The protrusions may thus cause gas passages which deviates the gas GA flow of the evacuated gas from a straight line during gas evacuation through the one or more gas passages 25. The deviation of the gas passage 25 from a straight line may be deviations in a direction parallel to the first plane PL1, and/or deviation in a direction perpendicular to the first plane PL1.

The deviation of the gas passage 25 from a straight line may in some embodiments be deviations of the gas passage 25 from a straight, radial, envisaged line RL going through the center C of the covering body 21 and to the edge of the covering body 21, see example in fig. 4.

The staggered protrusions at the seal material surface 22a may be obtained by an initial heating of the seal material 22 during a first firing of the seal material 22 on the covering body 21 surface 21a during cover 20 manufacturing, where the seal material is heated to a temperature above a sintering temperature and in a time that provides that the seal material is fired to densify.

As illustrated in fig. 4, the solidified seal material may encompasses the through hole in an uninterrupted manner.

As illustrated in fig. 4, the solidified seal material 22 may in embodiments of the present disclosure comprise or consist of a continuous ring of seal material 2, such as a continuous, annular ring of seal material. The width of the ring of seal material is larger than the size, such as diameter, of the hole 10, such as the smaller diameter portion 10a, that it is designed to surround.

The seal material 22 may thus be configured to extend continuously and uninterrupted so that no designed, predefined discontinuations are formed in the seal material.

The solidified seal material 22 may, prior to said heating of the solidified seal material 22 by means of said heater 7, be in continuous, un-interrupted contact with, and continuously adhere to, the covering body 21 surface 21a over the full length of the continuous ring of seal material 2.

The seal material 22 ring may e.g. have a circular, oval or polygonal (such as rectangular, hexagonal or the like) shape that is configured to surround a part of the through hole 10, 10a when the cover 20 is arranged on the first glass sheet 2 surface 10s, 2sp.

Figs. 4a-4b illustrate schematically, according to various embodiments of the present disclosure, a cover 20, such as the cover 20 of fig. 4, seen towards the major cover body surface 21a (fig. 4a) and towards the side surface (fig. 4b) respectively, of the covering body 21.

The solidified seal material 22 has a height H22, see fig. 4a. The height H22, such as the average height, of the seal material 22 may in some embodiments be less than 0.6 mm, such as less than 0.4 mm, such as less than 0.3 mm. The height H22, such as the average height, of the seal material 22 may in some embodiments be larger than 0.3 mm, such as larger than 0.5 mm, such as larger than 0.6 mm.

The heigh H22, such as local maximum height, of the solidified seal material 22 may in some embodiments vary less than 0.2 mm, such as less than 0.1 mm, such as less than 0.05 mm, for example less than 0.03 mm over the entire longitudinal extent 22e of the seal material 22 of the cover 20.

The heigh H22, such as local maximum height, of the solidified seal material 22 may in some embodiments vary less than 0.02 mm, such as less than 0.01 mm, such as less than 0.005 mm, over the entire longitudinal extent 22e of the seal material 22 of the cover 20.

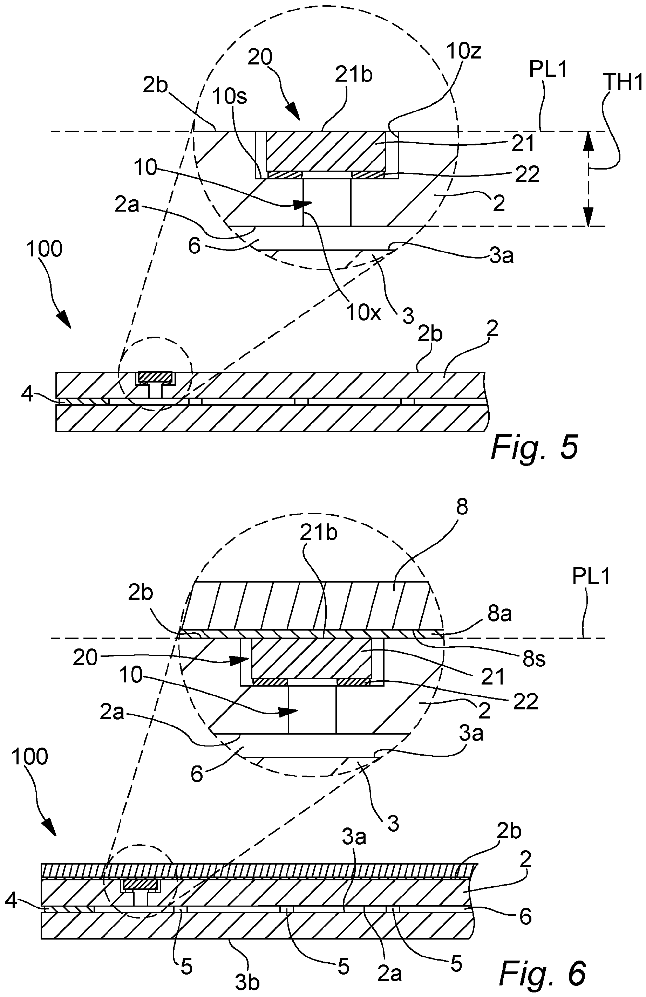

Fig. 5 illustrates schematically a VIG unit 100 according to embodiments of the present disclosure, after the evacuated gap 6 has been sealed by means of the cover 20. The seal material 22 is placed between the surface 21a of the covering body 21 and the step surface 10s. The seal material 22 provides a hermetic seal between the first glass sheet 2 and the covering body. The surface 21b of the covering body 21 that faces away from the evacuated gap 6 may be substantially flush with the second surface 2b of the first glass sheet 2.

Fig. 6 illustrates a laminated VIG unit 100 according to embodiments of the present disclosure. Here, a lamination glass sheet 8 is attached to the second major surface 2b of the first glass sheet 2 by means of a lamination interlayer 8a so that the lamination glass sheet 8 extends over and covers the cover 20 and the through hole 10. The lamination interlayer 8a may also, as illustrated, extend so as to cover the covering boy 21.

The lamination of the VIG unit 100 may be obtained by means of a combination of pressing and heating the VIG unit 100, the lamination glass 3 and the interlayer 8a so that the interlayer 8a softens and thereby adhere to major surfaces 8s, 2b of the glass sheets 8, 2.

The lamination interlayer 8a may comprise or be one or more of the following::
- ethylene vinyl acetate (EVA),
- polyisobutylene (PIB),
- polyacetals such as polyvinyl butyral (PVB),
- transparent polyurethane (PU),
- thermoplastic polyurethane (TPU),
- polyvinyl chloride (PVC),
- polyesters,
- cyclo olefin polymers (COP),
- ionomers and/or an adhesive configured to be activated by ultraviolet radiation.

PVB, EVA or TPU may however be preferred as the lamination interlayer 8.

The lamination interlayer 8a may in some embodiments have an average thickness of at least 0.4 mm, such as at least 0.6 mm, such as at least 0.7 mm.

The lamination interlayer 8a may in some embodiments have an average thickness between 0.4 mm and 1.8 mm, such as between least 0.5 mm and 1.2 mm, such as between 0.7 mm and 1 mm. The lamination interlayer 8a may in certain embodiments have an average thickness between 0.4 mm and 2 mm.

The lamination interlayer 8a may or may not be of the sound attenuating type. Sound attenuating lamination sheets may comprise three or more layers/sheets stacked on top of each other, where one intermediate layer has a glass transition temperature that is lower than the neighboring, such as adjacent, layers. In other embodiments, the lamination layer may comprise a single sheet of material, or e.g. a plurality of stacked sheets of the same material.

It is generally understood that in some embodiments of the present disclosure, the lamination interlayer 8a may adhere to the cover 20 such as to the covering body 21 surface 21b.

In fig. 6, the surface 21b of the covering body 21 that faces away from the evacuated gap 6 is substantially flush with the second surface 2b of the first glass sheet 2.

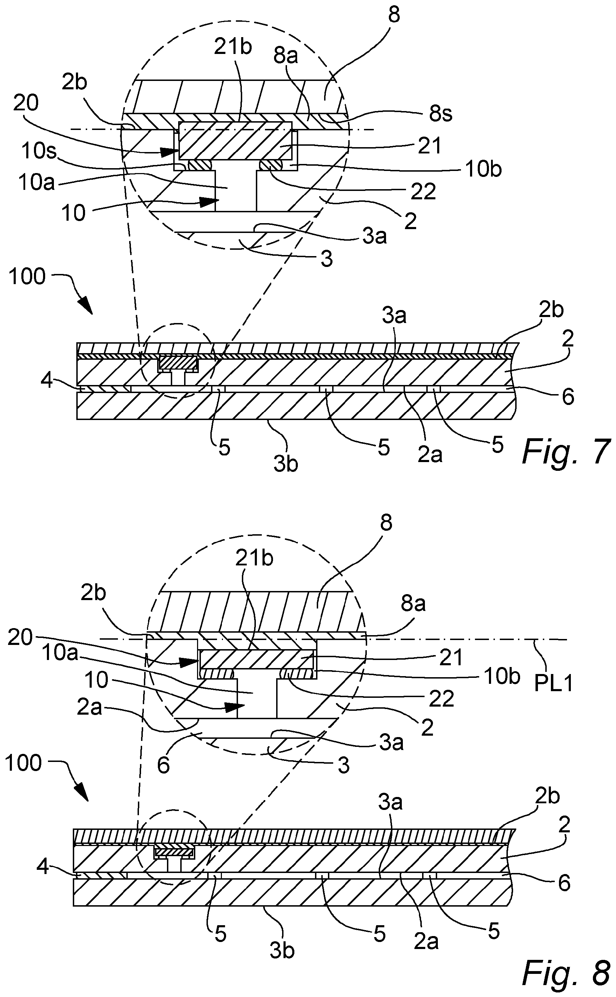

Fig. 7 illustrates schematically a VIG unit 100 according to embodiments of the present disclosure, wherein the covering body 21 extends through a plane PL1 comprising the second major surface 2b of the first glass sheet 2. The surface 2b of the cover is arranged below the surface 8s of the lamination glass sheet 8 to which the interlayer 8a adheres. The lamination interlayer 8a may hence extend around the covering body 21 and e.g. also in between the covering body 21 surface 21b and the lamination glass sheet 8 surface 8s.

Fig. 8 illustrates schematically a VIG unit 100 according to embodiments of the present disclosure, wherein the surface 21b of the covering body 21, which faces away from the gap 6 and the seal material 22 of the cover 20, is arranged below the second surface 2b of the first glass sheet 2 after said cooling of the softened seal material 22 so as to seal the evacuated gap 6. Fig. 8 moreover illustrates a further embodiment wherein a lamination interlayer 8a material extend into the through hole 10. The lamination interlayer 8a material may in some embodiments adhere to the surface 21b of the cover 20 which faces away from the gap 6.

At the final vacuum insulated glass unit 100, the surface 21b of the cover 20, such as of the covering body 21, which faces away from the gap 6 may be configured to be arranged less than 2 mm, such as less than 1 mm, such as less than 0.6 mm, for example less than 0.4 mm from the plane PL1 comprising the second major surface 2b of the first glass sheet 2. The surface 21b may be above (fig. 7) or below (fig. 8) the second major glass sheet 2 surface 2b, or may be flush with the surface 2b.

In some embodiments, not illustrated, a resin may be placed between the lamination layer and the surface 21b of the covering body. In some embodiments, not illustrated, a resin may be placed between the lamination layer and the surface 21b of the covering body so as to extend into the larger diameter portion 10b.

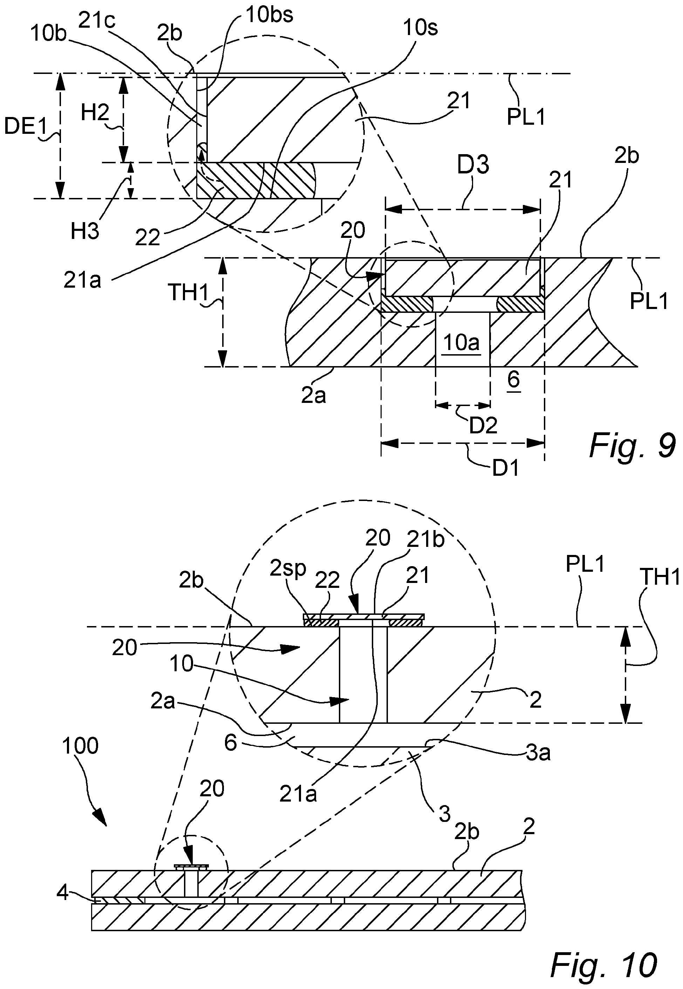

Fig. 9 illustrates schematically a cross section of a VIG unit 100 according to various embodiments of the present disclosure.

As also disclosed above, the through hole 10 is in fig. 9 a stepped through hole. The stepped through hole 10 comprises the smaller diameter portion 10a and the larger diameter portion 10b. The larger diameter portion 10b is arranged proximate the second major surface 2b of the first glass sheet 2. The smaller diameter portion 10a is arranged proximate the first major surface 2a of the first glass sheet, and proximate the gap 6. The larger diameter portion 10b has a first diameter D1, and the smaller diameter portion 10a has a second diameter D2.

In one or more embodiments of the present disclosure, the diameter D1 of the larger diameter portion 10b is at least 2 mm, such as at least 3 mm, larger than the diameter D2 of the smaller diameter portion 10a.

In one or more embodiments of the present disclosure, the diameter D1 of the larger diameter portion 10b may be between 5 mm and 12 mm, such as between 6 mm and 9 mm. In some embodiments, the diameter D1 of the larger diameter portion 10b may be between 3 mm and 7 mm, such as between 4 mm and 6 mm.

In some embodiments of the present disclosure, the diameter D2 of the smaller diameter portion 10a may be at least 1 mm, such as at least 2 mm, such as at least 3 mm. In some embodiments of the present disclosure, the diameter D2 of the smaller diameter portion 10a may be less than 5 mm, such as less than 4 mm, such as less than 3 mm or less than 2 mm.

In some embodiments of the present disclosure, the diameter D2 of the smaller diameter portion 10a may be between 1 mm and 4 mm, such as between 1 mm and 3 mm.

The width, such as the diameter D3 of the covering body 21 is smaller than the diameter D1 of the larger diameter portion 10b. In some embodiments, the difference in diameter D1-D3 between the diameter D3 of the covering body 21 and the diameter D1 of the larger diameter portion 10b may be less than 1 mm, such as less than 0.6 mm, such as less than 0.4 mm.

In one or more embodiments of the present disclosure, the thickness H2 of the covering body 21 may be 2.5 mm or less, such as 1.5 mm or less,
In one or more embodiments of the present disclosure, the thickness of the covering body 21 may be between 0.7 mm and 2.9 mm, such as between 0.9 mm and 2.4 mm, such as between 1.6 mm and 2.2 mm, endpoints included.

In one or more embodiments of the present disclosure, the depth DE1, such as the maximum depth, of the larger diameter portion 10b may extend over less than 70%, such as over less than 60%, such as over less than 50%, of the thickness TH1 of the first glass sheet 2.

In one or more embodiments of the present disclosure, the depth DE1 of the larger diameter portion 10b may be between 20% and 70%, such as between 30% and 60%, such as between 40% and 50%, of the thickness TH1 of the first glass sheet 2.

In one or more embodiments of the present disclosure, the depth DE1 of the larger diameter portion 10b is between 1 mm and 4 mm, such as between 1.5 mm and 3 mm, such as between 1.9 mm and 2.5 mm.

In one or more embodiments of the present disclosure, the depth DE1, such as the maximum depth, of the larger diameter portion 10b is between 0.05 mm and 0.35 mm larger, such as between 0.15 and 0.25 mm, larger than the thickness H2, such as the maximum thickness, of the covering body 21.

In other embodiments of the present disclosure, the depth DE1, such as the maximum depth, of the larger diameter portion 10b may be smaller than the thickness H2, such as the maximum thickness, of the covering body 21.

In some embodiments of the present disclosure, the maximum thickness H3 of the seal material 22 arranged between the covering body 21 surface 21a and the surface part 10s of the first glass sheet 2 which faces said surface 21a, after said sealing of the gap 6, may be between 0.050 mm and 0.4 mm, such as between 0.075 mm and 0.3 mm, such as between 0.125 mm and 0.250 mm.

The first glass sheet 2 and/or the second glass sheet 3 may in embodiments of the present disclosure have a thickness TH1 between 2 mm and 5 mm, such as between 3 mm and 4 mm, both endpoints included.

The first glass sheet 2 and the second glass sheet 3 may have the same or different thickness TH1.

The thickness H2 of the covering body 21 may in some embodiments be at least 30% lower, such as at least 50% lower, or at least 60% lower, than the thickness TH1 of the first glass sheet 2.

The thickness of the covering body 21 may in some embodiments of the present disclosure be between 30% and 85% lower, such as between 40% and 60% lower, such as between 45% and 55% lower, than the thickness TH1 of the first glass sheet 2.

The thickness H2 of the covering body 21 may in some embodiments be lower than the depth DE1 of the larger diameter portion 10b. In some embodiments, the thickness H2 of the covering body 21 may be at least 5% lower or at least 10% lower, than the depth DE1 of the larger diameter portion 10b.

In some embodiments of the present disclosure, the thickness H2 of the covering body 21 may be between 3% and 30% lower, such as between 5% and 20% lower, such as between 8% and 15% lower than the depth DE1 of the larger diameter portion 10b.

In some embodiments of the present disclosure, the thickness of the covering body 21 may be between 30% and 85% lower, such as between 40% and 60% lower, such as between 45% and 55% lower, than the thickness TH1 of the first glass sheet 2.

It is generally understood, as illustrated in fig. 9 and several figures described above, that the step surface 10a may be shaped so as to extend in a direction that is substantially parallel with a plane PL1 defined by/comprising a major surface 2a of the first glass sheet 2. In fig. 9, said plane PL1 comprises the second, major glass sheet surface 2b of the first glass sheet. In other embodiments of the present disclosure, the step surface 10a may be shaped to incline with a predefined angle to the plane PL1, such as an obtuse angle or an acute angle to the plane PL1.

Fig. 9 illustrates a still further embodiment of the present disclosure. Here, the previously mentioned clamping force F1 has directly or indirectly pushed the covering body 21 so as to deform the heated and softened seal material 22. This has provided that a part of the softened seal material 22 has moved (see dashed arrow) in between a side surface 21c of the covering body 21 and a side surface 10bs of the first glass sheet 2 which faces the side surface 21c of the covering body 21. The side surface 21c of the covering body 21 extends between the surfaces, such as major surfaces, 21a, 21b of the covering body 21.

The seal material 22 may hence adhere to both the surfaces 21a, 10s, and moreover to the surfaces 21c, 10bs.

Figs. 10 and 10a illustrates schematically a cross section of embodiments of the present disclosure, wherein the through hole 10 is a single diameter hole, and thus not a stepped hole. The diameter of the hole 10 may be between 1 mm and 5 mm, such as between 1 mm and 3 mm.

The cover 20 comprises the covering body 21. The covering body may be made from a thin sheet of material, such as a metal, or glass. The solidified seal material supports on the major, second surface 2b of the first glass sheet. Evacuation of the gap 6 may e.g. have been provided as previously described according to various embodiments of the present disclosure.

The combined height/thickness H2 of the covering body 21 and the height H3 of the seal material 22 (after evacuation and sealing of the gap 6) may e.g. In some embodiments be less than 2 mm, such as less than 1 mm, such as less than 0.75 mm.

In fig. 10 and 10a, the combined height/thickness of the covering body 21 and the seal material 22 (after evacuation and sealing of the gap 6) may be less than 2 mm, such as less than 1 mm, such as less than 0.75 mm.

Fig. 10a illustrates a laminated version of the embodiment illustrated in fig. 10. Here, the lamination glass 8 covers the cover 20. The combined height/thickness of the covering body 21 and the seal material 22 is here lower than the thickness of the lamination interlayer 8a.

The lamination interlayer 8a may in some embodiments have an average thickness of at least 0.4 mm, such as at least 0.6 mm, such as at least 0.7 mm.

The lamination interlayer 8a may in some embodiments have an average thickness between 0.4 mm and 2 mm, such as between 0.5 mm and 1.2 mm, such as between 0.7 mm and 1 mm.

The lamination interlayer 8a may in some embodiments have an average thickness between 0.7 mm and 2 mm, such as between 0.7 mm and 1.7 mm.

It is generally understood that the lamination interlayer 8a may adhere to the major surface 21b of the covering body 21, or in other embodiments may not adhere to the major surface 21b of the covering body 21.

Fig. 11 illustrates an embodiment of the present disclosure, wherein the through hole 10 in the first glass sheet 2 is provided. This providing of the through hole comprises laser cutting the through hole in the first glass sheet 2 by means of a laser 90 beam 90a. The laser cutting may be conducted prior to assembling of the vacuum insulated glass VIG unit assembly 1 as described above. If the first and second glass sheets 2 are tempered glass sheets, such as a thermally tempered glass sheet, and said laser cutting by means of the laser 90 may be provided prior to tempering of the first glass sheet 2.

In one or more embodiments of the present disclosure, the surface roughness of the final surface 10s of the first glass sheet 2 which will in the end face the solidified seal material 22 surface 22a may be above 10 µm, such as above 25 µm, such as above 35 µm. Said surface roughness may be the Ra or Rz surface roughness parameter, preferably the Ra parameter.

In one or more embodiments of the present disclosure, the surface roughness of the surface part 2sp, 10s of the first glass sheet 2 which faces the surface 2a of the solidified seal material 22 may be between 10 um, and 150 µm such as between 25 µm and 100 µm, such as between 35 µm and 75 µm. Said surface roughness may be the Ra or Rz surface roughness parameter, preferably the Ra parameter.

See also the previous description relating to surface roughness of the first glass sheet 2 surface and the seal material 22 surface 22a roughness.

The dash-dotted line 91 indicates the final surface level of the stepped surface 10s when the laser 90 has finished. In some embodiments, the laser 90 may provide the entire, stepped through hole 10. In other embodiments, a mechanical drilling may provide an initial through hole having the diameter of the smaller diameter portion 10a, and the laser 90 may then provide the remaining larger diameter portion 10b around that initial through hole to provide the larger diameter portion having the desired depth DE1.

Fig. 12 illustrates schematically a cross section of an embodiment of the present disclosure, wherein the surface roughness of the surface part 10s, 2sp is illustrated after the evacuated gap has been permanently sealed by the cover 20.

As can be seen, the surface roughness of the surface of the first glass sheet. Such as the step surface 10s, of the first glass sheet 2 may remain whereas the material of the seal 22 of the cover has now adapted to the surface roughness of the step surface 10s. The surface roughness value of the surface 21a of the cover 21 to which the seal material 22 bonds/adheres may be significantly lower, such as at least 5 times lower or 10 times lower, or even 50 times lower than the surface roughness value, such as an Ra value, of the glass sheet surface 10s.

In one or more embodiments of the present disclosure, the cover 20, prior to arranging of the cover at the VIG unit assembly, may have been subjected to a heating of the seal material 22 on the covering body 21 surface 21a so as to soften, such as liquify, the seal material, and so as to obtain adherence to the covering body 21 surface 21a. Subsequently, the softened glass solder material is cooled so as to solidify the glass solder material. The resulting cover 21 with the solidified seal material 22 is then used at the VIG unit assembly 1 for the final, permanent seal of the evacuated gap 6, e.g. as described above according to various embodiments of the present disclosure.

Fig. 13 illustrates schematically manufacturing of a plurality of covers 20 for use at a VIG unit assembly, according to embodiments of the present disclosure.

The manufacturing of the cover 20 comprises initially providing a plurality of covering body workpieces 21, such as covering body discs.

Then, a glass solder material 22 is applied to a surface 21a of each of the provided plurality of covering body workpieces 21. The applied glass solder material 22 is a seal material. The applied seal material may e.g. have been mixed with a solvent so as to provide a paste-like texture of the applied solder material. An outlet, such as a nozzle, may be used for applying the seal material 22.

The softening temperature of the covering body workpiece 21 is larger than a softening temperature of the applied glass solder material 22. Hence, the glass solder material 22 may be fired to soften and melt without this affecting the structure of the workpiece 21. The workpiece may comprise or consist of a glass material or a metal material body, such as an annealed glass body, or a metal material body..

If the covering body is a metal body, it may e.g. comprise a steel body, such as a stainless steel body, an aluminum body, a ferro magnetic body or another metal body or metal alloy body.

The covering body workpieces 21 with the applied glass solder material 22 thereon are then arranged in working space 50. In some embodiments, the working space may be a vacuum chamber. The working space, such as the vacuum chamber 50, may be enclosed by walls 55.

The manufacturing of the cover 20 comprises in fig. 13 initially providing a plurality of covering body workpieces 21, such as covering body discs. A plurality of covers 20 are obtained from the cooled covering body workpieces after the heating in the working space 50. Each of the covers may be used individually as a cover 20. At least 5 individual workpieces, such as at least 20 individual workpieces, at least 50 individual workpieces or at least 100 individual workpieces, such as at least 500 individual workpieces with seal material thereon may be arranged in the working chamber at once. In some embodiments, the manufacturing of the covers may be a batch process.

The pressure in the vacuum chamber 50 is then reduced, such as by means of a pump 80 which evacuates gas through an outlet 51 of the vacuum chamber 50.

Thereafter, the applied glass solder material 22 is heated in the vacuum chamber 50 by means of a heater 60 while said pressure in the vacuum chamber 50 is remained reduced. The reduction in pressure may alternatively be started after the heating of the seal material 22 is started.

The heating/firing of the seal material 22 by means of the heater 60 is provided so as to soften, such as liquify, the applied glass solder material 22 so as to provide an outgassing of the applied glass solder material.

The reduced pressure in the chamber 50 may help to provide a more dense seal material 22 at the end of the heating, after the seal material 22 has solidified on the covering body 21 surface 21a.

When the seal material 22 has been sufficiently heated and softened, the heated covering body workpieces 21 with the outgassed glass solder material 22 thereon are cooled so as to solidify the glass solder material 22.

Finally, the pressure in the vacuum chamber 50 is equalized and the covers can then be removed from the vacuum chamber and used at a VIG unit assembly 1 for covering a through hole to seal an evacuated gap 6.

Said equalizing of the pressure in the vacuum chamber 50 may e.g. be provided during or after the cooling of the seal material 22 and covering body 21 in the vacuum chamber 50. In other embodiments, the equalization of the pressure in the vacuum chamber 50 may e.g. be provided during a part of, such as within the last 50%, such as within the last 20%, such as within the last 5%, of the seal material 22 heating time (see e.g. ref. Ht21 of fig. 14).

The heating of the applied glass solder material 22 by means of the heater 60 may be provided so as to soften, such as liquify the applied glass solder material 22. In some embodiments, solvent may be outgassed from the seal material by the heater before the seal material start to soften.

In one or more embodiments of the present disclosure, the heating of the applied seal material 22 so as to soften the seal material at the respective covering body 21 may comprise heating the seal material to a temperature above 200°C, such as above 300°C, such as above 350°C.

In one or more embodiments of the present disclosure, the heating of the applied seal material 22 so as to soften the seal material at the respective covering body 21 may comprises heating to a temperature between 200°C and 450°C, such as between 300°C and 400°C, such as between 320°C and 370°C.

In one or more embodiments of the present disclosure, said heating by means of the heater 60 comprises heating the glass solder material 22 of the cover 20 to a temperature above the rated glass transition temperature Tg of the glass solder material 22.

In some embodiments of the present disclosure, said heating by means of the heater 60 may comprise heating the glass solder material 22 of the cover 20 to a temperature above the rated melting temperature Tm of the glass solder material 22.

In one or more embodiments of the present disclosure, said reducing of the pressure in the vacuum chamber 50 comprises reducing the pressure in the vacuum chamber to a pressure below 1 bar, such as below 500 mbar, such as below 100 mbar, such as below 20 mbar, such as to 10 mbar or below.

In one or more embodiments of the present disclosure, said reducing of the pressure in the vacuum chamber 50 comprises reducing the pressure in the vacuum chamber 50 to a pressure between 10 ⁻³ millibar and 500 mbar, such as between 10 ⁻² millibar and 100 mbar.

In one or more embodiments of the present disclosure, said reducing of the pressure in the vacuum chamber 50 comprises reducing the pressure in the vacuum chamber 50 to be above 10 ⁻³ millibar, such as above 10 ⁻² millibar.

The plurality of covering bodies 21 may be placed on a base 95 in the vacuum chamber 50.

In some embodiments, the heater 60 comprises a radiation heater, such as a laser.

In other embodiments, the heater 60 comprises a conduction heater. In this case, the covering bodies 21 may be placed on a base 95, such as a support base plate, which is heated by the heater 60. The surface 21a of the covering body 21 with the applied seal material faces away from the base 95. This heats the covering bodies 21, and the covering bodies 21 then heats the seal material 22 so as to provide the softening of the seal material 22. The seal material 22 is thus in this embodiment heated by the covering body 21. The base 95 may also be referred to as a conduction heating part.

It is understood that in some embodiments, convection heating may be used in the vacuum chamber 50, e.g. while the chamber is evacuated and the seal material outgasses, dependent on the amount of evacuation provided.

In some embodiments, the heater 60 may comprise a convection heater and/or a conduction heater. It is also understood that the heater 60 in some embodiments may or may not comprise a combination of different heaters.

In some embodiments, a heater 60 may provide convection heating for heating the conduction heating part 95, such as a base. The conduction heating part 95 may then transfer the heat energy to the covering body/bodies that may be directly or indirectly in contact with the conduction heating part 95.

It is understood that convection heating may additionally or alternatively also be used for directly heating the covering bodies 21 and the seal material 22. The ambient, remaining gas/air in the chamber 50 hence heats the covering bodies 21 and the seal material 22 by means of convection heating. This gas/air may be circulated by the heater 60.

The heating of the seal material 22 by means of the heater 60 in the vacuum chamber 50 may be provided relatively slowly so as to accommodate extraction/release of solvent and binder from the seal material while maintaining an open structure in the seal material.

It is understood that in other embodiments, the pressure in the chamber 50 may be between 500 mbar and 1 bar during the heating of the seal material, such as over at least 20%, 40% or at least 90% of the heating time. In still further embodiments, the vacuum chamber may be omitted and the seal material may be heated and softened by a heater 60 at atmospheric pressure. In that case, convection and/or conduction heating may be used.

In fig. 13, a plurality of individual covering body workpieces 21 are heated in the workspace / working space 50. Each individual covering body workpiece comprises a portion of the seal material to be heated. The individual covering body workpieces 21 are each configured to constitute a cover 20, such as a single cover, when the seal material has been solidified. In some embodiments, the covers 20 may substantially not need any further treatment after the cooling, and a cover 20 may thus be obtained directly from the respective cooled workpiece with solidified seal material 22 thereon. In other embodiments, a plurality of covers may be obtained from a single workpiece after the seal material has been solidified. Embodiments hereof are described in more details further below.

Fig. 14 illustrates schematically a controlled heat increase rate for heating the seal material 22 at the covering bodies 21, according to embodiments of the present disclosure. The graph T21 illustrates the temperature of the seal material 22 during the heating provided so as to soften the seal material during the manufacturing of the cover, prior to using the cover at the VIG unit assembly 1. The dash dotted line Tar21 illustrates the desired target temperature of the seal material 22 at the covering body 21.

The target temperature Tar21 may in embodiments be set to a temperature at or above the rated glass transition temperature Tg of the glass solder material 22.

The target temperature Tar21 may be a temperature setting at a temperature above 200°C, such as above 300°C, such as above 350°C. In some embodiments, the target temperature Tar21 may be set to a temperature between 200°C and 450°C, such as between 300°C and 400°C, such as between 320°C and 370°C or between 350°C and 390°C.

In some embodiments, the heating of the seal material 21 may be provided with a heat increase rate of less than 5 °C/minute, such as less than 2 °C/minute, such as less than 1 °C/minute or less than 0.7 °C/minute. In some embodiments, the heating of the seal material may be provided with a heat increase rate of substantially 0.5 °C/minute.

In some embodiments, the heating of the seal material 21 may be provided with a heat increase rate of at least than 0.1 °C/minute, such as at least 0.3 °C/minute, such as at least 0.4 °C/minute.

In some embodiments, the heating of the seal material 21 may be provided with a heat increase rate of between 0.1 °C/minute and 5 °C/minute, such as between 0.1 °C/minute and 2 °C/minute, such as between 0.3 °C/minute and 0.7 °C/minute.

This heat increase rate may in some embodiments of the present disclosure be conducted over at least 40%, such as over at least 50%, such as over at least 70% or over at least 95% of the total heating time Ht21. In some embodiments, the heat increase rate may be conducted/provided over substantially 100% of the heating time Ht21.

In some embodiments, the heat increase rate of the seal material 22 may be provided over the first 50%, such as the first 70% or the first 95% of the total heating time.

In other embodiments, said heat increase rate is provided at least over the last 50%, such as the last 70% or the last 95% of said heating time.

The heating time HT21 where the seal material 22 temperature T21 is controlled to be gradually increased is in fig. 14 defined between the initiation time Tinit of the seal material heating and to the time Tend where the seal material 22 has reached the desired seal material target temperature Tar21. In some embodiments, the seal material 22 may be maintained at the target temperature Tar21 for a predefined time period (between Tend and Tc) before initiating the cooling of the seal material 22 at time Tc. In other embodiments, the cooling of the seal material 22 may be initiated substantially at time Tend when the target temperature Tar21 has been reached.

In some embodiments, the heater 60 may heat the entire seal material 22, such as the full mass of the seal material 22 on the covering body surface 21 to the target temperature Tar21. This may soften the remaining material after outgassing.

In some embodiments, The heater 60 may heat the seal material 22 to a target temperature which is within ±30°C, such as within ±20°C, such as within ±10°C from the temperature to which it 22 is heated by means of the heater 7 (see fig. 2) when reheating and re-softening of the seal material 22 to seal the evacuated gap 6.

In some embodiments of the present disclosure, the heat increase rate of the seal material (between time Tinit and time Tend) may be provided over at least 50%, such as at least 70%, such as at least 95%, of the total heating time of the seal material 22 during cover manufacturing.

In some embodiments, the heating time Ht21 before the seal material 22 reaches the target temperature Tar21 may be at least 1 hour, such as at least 3 hours, such as at least 5 hours, such as at least 8 hours.

In some embodiments, the heating time Ht21 before the seal material 22 reaches the target temperature Tar21 may be at least 20 minutes such as at least 40 minutes.

In some embodiments of the present disclosure, the heating time Ht21 before the seal material reaches the target temperature is at least 30 minutes, such as at least 1 hour.

In some embodiments of the present disclosure, the heating time Ht21 before the seal material reaches the target temperature is between 30 minutes and 14 hours, such as between 1 hour 10 hours, such as between 3 hours and 9 hours.

In some embodiments, the heat increase rate of the seal material 22 may be controlled to vary over the heating time Ht21. In other embodiments, the heat increase rate of the seal material 22 may be controlled to be substantially constant over the heating time Ht21.

The heating of the seal material 22 in the working space 50 may be considered a first pre-heating and softening, such as liquification, of the seal material 22. When the cover 20 comprising the solidified seal material is then used for permanently sealing the evacuated gap 6 of the VIG unit as e.g. described previously, such as in the furnace 70, the seal material 22 is re-heated and resoftened.

The seal material, 22 when applied to the covering body, may in embodiments of the present disclosure comprise glass frit material, filler material and binder material. In some embodiments, solvent material may also be present. The applied seal material 22 may comprise or be a low melting point solder glass material.

The heating of the seal material 22 in by means of the heater 60 during cover 20 manufacturing may burn out / remove binder material and/or solvent material in the seal material 22.

In some embodiments, the amount of binder material in the seal material 22 after it has been heated by the heater 60 and solidified by cooling it 22, may be below 5 wt%, such as below 2 wt%, such as below 1 wt%.

In some embodiments, the amount of binder material in the seal material 22 after it has been heated by the heater 60 and solidified by cooling it 22, may be above 0.1 wt%, such as above 0.4 wt%, such as above 1 wt%.

In some embodiments, the amount of binder material in the seal material 22 after it has been heated by the heater 60 and solidified by cooling it 22, is at least 1 %, such as at least 5 %, such as at least 10%, compared to the amount of binder material in the seal material 22 before said heating by means of the heater 60.

In some embodiments, the amount of binder material in the seal material 22 after it has been heated by the heater 60 and solidified by cooling it 22, may be between 0.1 wt% and 5 wt%, such as between 0.4 wt% and 2 wt%.

In some embodiments, the amount of solvent material in the seal material 22 after it has been heated by the heater 60 and solidified by cooling it 22, may be below 4 wt%, such as below 2 wt%, such as below 1 wt% or below 0.1 wt%.

In some embodiments, said heating by means of the heater 60 may reduce the amount of binder material in the seal material by at least 10 %, such as by at least 50 %, such as by at least wt% when compared to the amount of binder material in the seal material 22 before said heating by means of the heater.

In some embodiments, the heating by means of said heater 60 may reduce the amount of solvent material in the seal material 22 by at least 40 %, such as at least 80 %, such as at least wt% when compared to the amount of solvent material in the seal material before said heating by means of the heater 60.

In some embodiments, the amount of binder material in the seal material 22 after it has been heated by the heater 60 and solidified by cooling it 22, may have been reduced by at least 60%, such as at least 80%, such as at least 95% when compared to the amount (wt%) of binder material in the seal material 22 arranged at the covering body 21 surface before it is heated by the heater 60 to the target temperature Tar21.

In some embodiments, the amount of solvent material in the seal material 22 after it has been heated by the heater 60 and solidified by cooling it 22, may have been reduced by at least 60%, such as at least 80%, such as at least 98%, when compared to the amount (wt%) of solvent material 22 at the covering body 21 before it is heated by the heater 60 to the target temperature Tar21.

In some embodiments, the amount (wt%) of binder material in the seal material 22 before it has been heated by the heater 60 and solidified by cooling it 22 may be higher than the amount (wt%) of binder material in the seal material 22 after it has been heated by the heater 60 and solidified by cooling it 22.

In some embodiments, the amount (wt%) of binder material in the seal material 22 before it has been heated by the heater 70 and solidified by cooling it 22 to seal the hole 10 and thereby seal the evacuated gap may be higher than the amount (wt%) of binder material in the seal material 22 after it has been heated by the heater 70 and solidified by cooling it 22 to seal the evacuated gap.

As an example, if the amount of binder in the seal material before the heating to soften the seal material is e.g. 10 wt%, and the heating by means of said heater reduces the amount of binder material in the seal material by 50% when compared to the amount of binder material in the seal material before said heating by means of the heater, the amount of binder material in the seal material after it has been heated by the heater and solidified by cooling it will be 5 wt%.

Fig. 15 illustrates schematically a flow chart relating to VIG unit manufacturing, according to embodiments of the present disclosure. This method may e.g., in some embodiments, be provided by means of a solution as illustrated in fig. 2. Other solutions for VIG unit manufacturing may also and/or alternatively be used.

In Step S151, a VIG unit assembly 1 is provided. The provided VIG unit assembly may comprise a first glass sheet 2 and a second glass sheet 3, and a plurality of support structures 5 distributed in a gap 6 between a first major surface 2a of the first glass sheet 2 and a first major surface 3a of the second glass sheet 3. A peripheral edge seal 4 is configured to seal the gap 6. The first glass sheet 2 comprises a through hole 10, wherein the through hole 10 extends between the first major surface 2a and a second, oppositely directed, major surface 2b of the first glass sheet 2. The VIG unit assembly may e.g. be an assembly 1 as described according to various embodiments above, see e.g. fig. 1.

In Step S152, a cover 20 is provided. The cover 20 may comprise a covering body 21 and a solidified seal material 22. The solidified seal material 22 may comprise glass solder material which is attached to a surface 21a of the covering body 21. The provided cover 20 may be a cover 20 as disclosed according to various embodiments above and/or below. The cover 20 is arranged so that the solidified seal material 22 is placed between a surface part 2sp, 10s of the first glass sheet 2 and the covering body 21, and so that the covering body 21 covers at least a part 10a of the through hole 10.

In Step S153, the vacuum insulated glass VIG unit assembly 1 is heated with the cover 20 in a furnace 70, see e.g. the description to figs. 1 and/or 2 above.

In Step S154, the gap 6 of the VIG unit assembly is evacuated through the through hole 10 in the first glass sheet. E.g. as described in relation to one or more of figs. 2-4b.

The evacuation of the gap 6 may in some embodiments be provided while the edge seal 4 is heated and softened. In some embodiments, the gap evacuation may provide a vacuum clamping and even deformation of the softened edge seal 4. The vacuum clamping is obtained due to pressure difference between the pressure in the gap 6 and the ambient pressure surrounding the VIG unit assembly. In other embodiments, mechanical clamping may additionally or alternatively be used for providing a clamping force onto the edge seal 4.

When sufficiently evacuated, the gap 6 is sealed in Step S155 by heating and thereby softening the seal material 22 of the cover, so as to provide that the softened seal material 22 adhere to the surface part 2sp, 10s of the first glass sheet 2 around the through hole 10.

In some embodiments, prior to sealing the gap 6 by means of the cover 20, the VIG unit assembly may be cooled in order to cool and harden the edge seal 4 after the heating in step S153 and before sealing by means of the cover. Evacuation of the gap 6 may be continued during this cooling.

Finally, the softened seal material 22 and the VIG unit is cooled in Step S156 to provide the final VIG unit.

It is understood that the placing of the cover (step S153) in other embodiments instead may be conducted after step S153, such as after step S154.

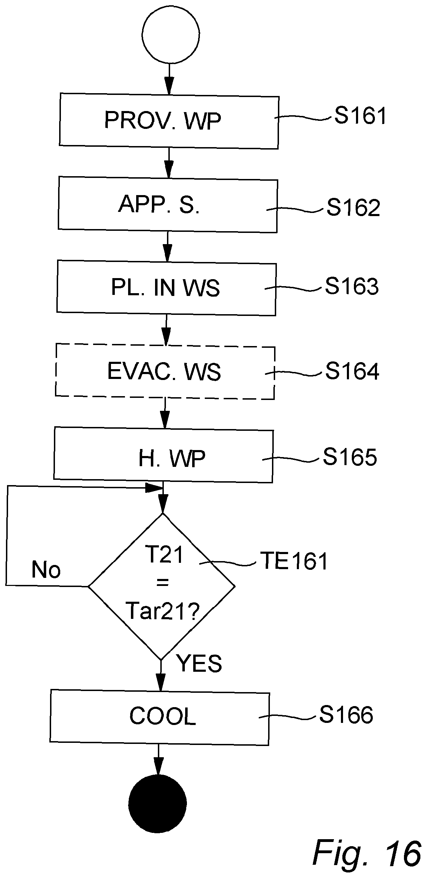

Fig. 16 illustrates schematically a flow chart relating to manufacturing of a cover 20 for use for sealing an evacuated gap 6 of a VIG unit, according to embodiments of the present disclosure. This method may e.g., in some embodiments, be provided by means of a solution as illustrated in figs. 13 and/or 14. The cover 20 may be a cover as described according to one or more embodiments above.

In Step S161, workpieces for use as covering body 21 are provided. It may e.g. be glass body workpieces or metal body workpieces.

In step S162, seal material 22 is applied on a surface of the respective workpiece, e.g. as a continuous seal material ring. This may be provided by means of a nozzle, by means of printing, such as 3D printing, applying by means of smearing and/or the like.

Then, the workpieces with the applied seal material are placed (Step S163), in a work station. In some embodiments of the present disclosure, the workstation may comprise or be a vacuum chamber (see e.g. fig. 13).

In some embodiment, step S162 may be provided at the work station. In other embodiments, step S162 may be provided at another location than at the work station.

If the work station comprises or is a vacuum chamber, the vacuum chamber may be evacuated to reduce the vacuum chamber pressure, see optional step S154. See e.g. embodiments hereof described above. For example, in some embodiments, the reducing of the pressure in the vacuum chamber 50 may comprise reducing the pressure in the vacuum chamber to a pressure below 500 mbar, such as below 100 mbar, such as below 20 mbar, such as to 10 mbar or below, during the cover 20 manufacturing.

In step 165, the workpieces at the work station is heated so as to soften the seal material. This heating may in some embodiments provide binder and/or solvent burnout. See e.g. one or more embodiments described above in relation to fig. 13 and/or 14.

The optional evacuation S164 of the vacuum chamber is in fig. 16 illustrated to be started before starting of the heating S165. In other embodiments of the present disclosure, the evacuation S164 may be started during the heating S165.

The heating of the workpieces is provided (see test TE161) until a target temperature Tar21 of the work piece bodies and the seal material on these is reached. This may be obtained by means of temperature monitoring.

In some embodiments, a predefined heating scheme may be followed in step S165 / test TE161 which will ensure sufficient heating of the workpiece body and the seal material to a desired target temperature Tar21, e.g. with a defined/controlled heat increase rate as e.g. described in more details above.

The temperature of the seal material 22 and/or workpiece 21 may be actively monitored (directly or indirectly) by a temperature monitoring system. Alternatively, a predefined heating scheme / heating profile may be designed so as to assure the desired temperature increase to the target temperature without measuring the seal material and/or workpiece temperature. This may be based on e.g. experiential data.

When the target temperature Tar21 is reached, the workpiece and seal material is cooled, thereby obtaining a cover 20 for use in a VIG unit manufacturing as e.g. described above according to various embodiments of the present disclosure.

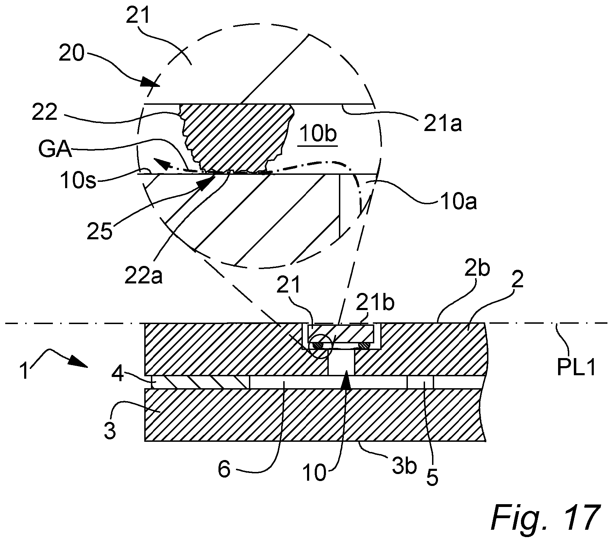

Fig. 17 illustrates schematically evacuation of the gap 6, where gas GA leaves through gas GA passages 25 arranged between the seal material 22 surface 22a and the first glass sheet, according to further embodiments of the present disclosure. A difference between the embodiment illustrated in fig. 3 and the embodiment illustrated in fig. 17 is that the step surface 10s is more plane, and may e.g. be polished or the like to have a surface roughness that is lower, such as at least 10 times lower, e.g. at least 20 times lower or at least 50 times lower than the surface roughness of the seal material 22 surface 22a. This may e.g. be advantageous in relation to provide a good bonding between seal material 22 and step surface 10s.

The gas flow GA is therefore primarily or substantially fully made possible due to gas passages 25 arranged between the surface part 10s of the first glass sheet 2 and a surface 22a of the solidified seal material 22 which faces the surface part 10s of the first glass sheet 2. These gas passages 25 are provided/obtained as a consequence of the surface roughness of the solder material 22 surface 22a as e.g. previously described.

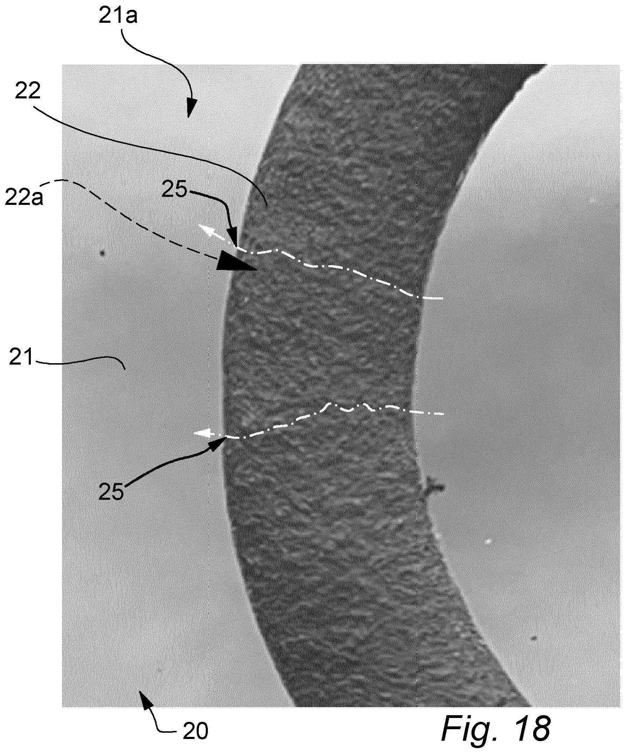

Fig. 18 illustrates a grayscale image of a test example of the surface 22a of a solidified seal material 22 at a cover body 21 surface 21a.

The surface roughness of the seal material surface 22a can be seen and an envisaged gas passage (dash-dotted line) is indicated. The gas passages 25 are indicated by a white dash-dotted line to improve contrast and readability in the image. The surface 22a roughness may be as e.g. described previously according to various embodiments of the present disclosure.

Even though not shown in fig. 18, the solidified seal material 22 may comprise a continuous ring of solidified seal material 22, in this case an annular ring of seal material. The seal material 22 surface 22a roughness is obtained by means of pre-heating and subsequent cooling of the seal material 22 as e.g. described according to various embodiments above and/or below.

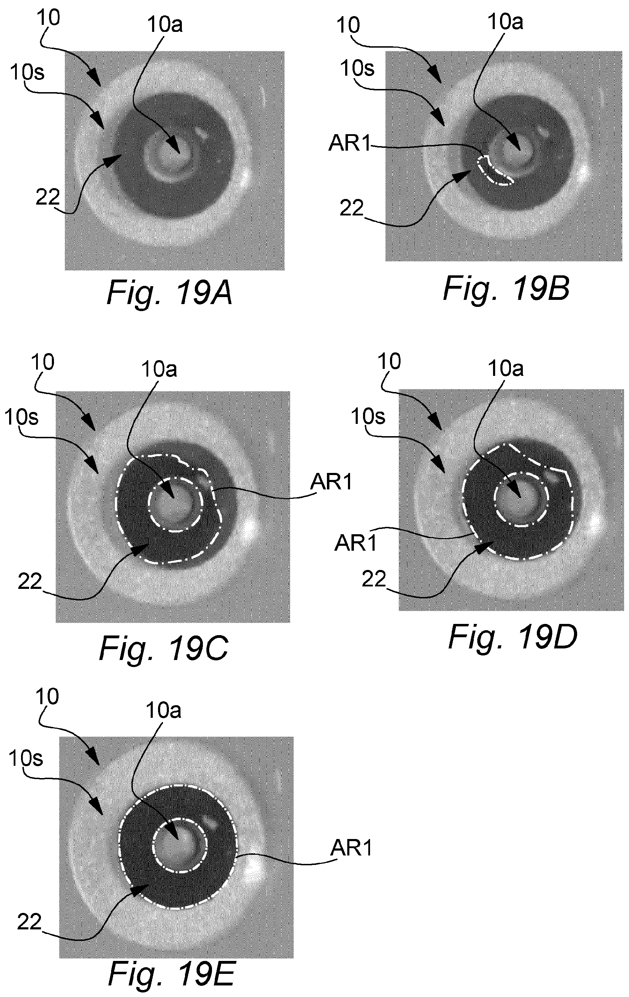

Figs. 19A-19E illustrates grayscale images of a successful test of using the cover 20 illustrated in fig. 17 with the solidified seal material 22. The images in figs. 19A-19E are taken to provide a view through the glass sheet 3 (see fig. 1) opposite the hole 10.

In fig. 19A, the cover 20 has been arranged on a glass sheet, and no heating has been provided yet to a degree where the seal material 22 softens. As can be seen in the figures 19B-19E, the seal material 22 gradually turns darker. The darkening indicates that the seal material is heated to soften and adhere to the step surface 10s around the smaller diameter hole 10a. This may e.g. be obtained by means of laser heating or the like, see e.g. fig. 2 which is described above.

In fig. 19B it can be seen that a smaller dark area is formed (enclosed by dashed lines to improve understanding). As the heating and softening gradually evolves (see gradually evolving in figs. 19→19→19→19E), it can be seen that continuously larger areas AR1 of the seal material bonds to the step surface 10s, since the darkened area increases. In the figures 18B-18E, the dark area AR1 is encircled by dashed lines for improved understanding - the dashed lines are white to improve contrast and readability. In fig. 18E, the seal material 22 fully adhere to the step surface continuously around the smaller diameter hole and encircles the smaller diameter hole. Hence, a full, hermetic, airtight connection is formed when the seal material 22 is cooled again.

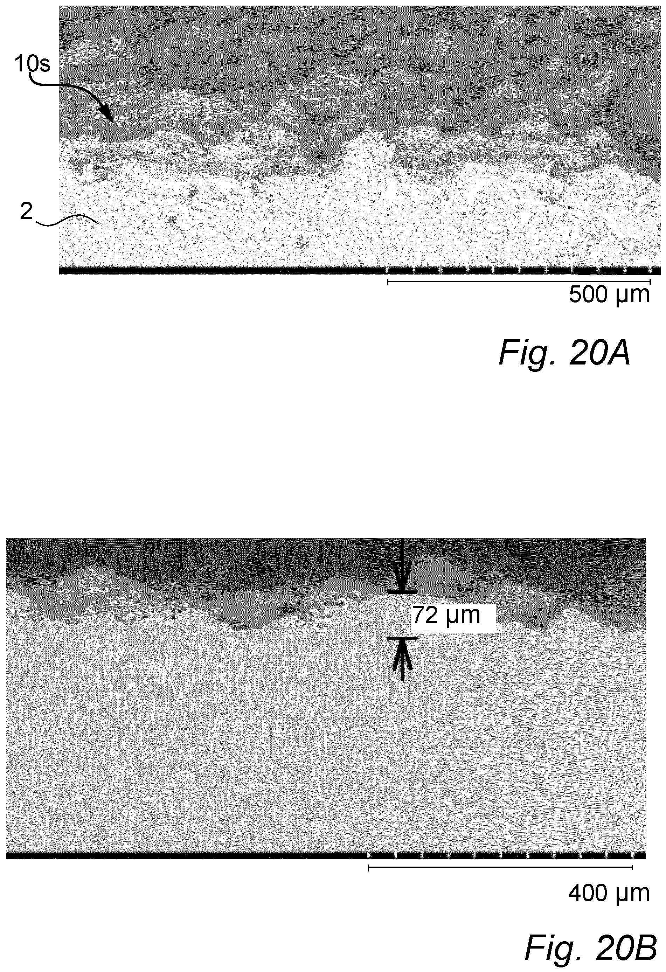

Fig. 20A-20B illustrates microscopic images of the step surface 10s according to a test. The surface 10s roughness may be obtained by a laser cutting into the surface of the glass sheet 2, see e.g. the description above in relation to fig. 11. A surface roughness parameter of a part of the step surface 10s that is later to bond with the seal material 22 of the cover is in fig. 20B measured to be 72 µm. This laser roughness may be adapted by proper control of the laser, by selecting a suitable size laser and/or by surface treatment after the laser cutting.

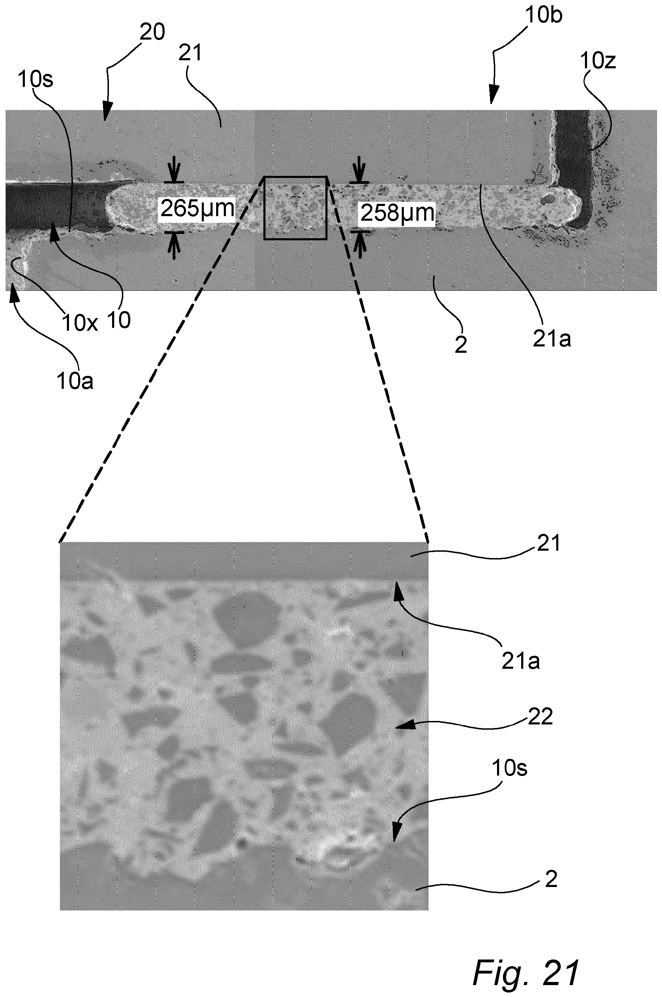

Fig. 21 illustrates microscopic images of a test sample comprising the glass sheet 2 with the stepped through hole 10 which is covered by the cover 20. The hole 10 comprises the smaller diameter portion 10a and the larger diameter portion 10b. The covering body 21 comprises the surface 21a which faces the step surface 10s. The seal material 22, in this case a glass frit material, is placed between the covering body surface 21a and the glass sheet 2 surface 10s. As can be seen, the covering body 21 surface 21a is smooth, whereas the step surface 10s of the glass sheet 2 facing the seal material 22 is rough and comprises a surface roughness as e.g. described above.

The seal material 22 has been subjected to the heating and softening by means of a heater 7, such as a radiation heater, such as a laser or an infrared heater (see e.g. fig. 2), and thus, any initial surface roughness of the seal material 22 that may have resulted in a gas passage for gas that is evacuated from the gap of the VIG unit has been removed, and the shape and size seal material 22 has been adapted due to the heating and under influence of a clamping part 40 (see fig. 2) so as to also bond to the surface step 10s. As can be seen in the enlarged rectangle of the image, the seal material 22 extends to abut and bond well to the step surface 10s. The seal material 22 hence provides an airtight hermetic seal between the covering body 21 and the glass sheet 2.

Fig. 22 illustrates schematically a manufacturing of a vacuum insulated glass (VIG) unit by means of a VIG unit assembly 1, according to further embodiments of the present disclosure. As also illustrated in fig. 2, a clamping part/ pushing part 40 may be arranged inside the evacuation cup 9. The clamping part 40 may or may not be attached directly or indirectly to the housing 9b of the evacuation cup 9. The evacuation cup 9 may provide a counter force so that the clamping part 40 can provide the clamping force/pushing force F1. If the clamping part 40 comprises a spring, the spring may be deformed between the cup housing 9b and cover 20 and hence provide the force F1.

During the evacuation of the gap 6 by means of the pump 30, the surface 22a of the solidified seal material 22 may support on, such as directly support on, the surface part 2sp, 10s of the first glass sheet 2. The surface 22a of the solder material 22 which faces the surface 2sp of the first glass sheet 2, such as the step surface 10s, may be pressed towards the surface 2sa of the first glass sheet 2, such as towards the step surface 10s by means of the clamping part 40. When the seal material 22 is sufficiently heated, the clamping part 70 pushes the covering body 21 to move the covering body further into the hole 11 and may e.g. help to deform the seal material 22 which has been softened by the heater 7.

In fig. 22, an intermediate pushing body 42 is used. The intermediate pushing body 42 is arranged between the force F1 inducing clamping part 40 and the covering body 21 surface 21b.

The maximum width, such as the maximum diameter, of the intermediate pushing body 42 is larger than the maximum width (See D3 of fig. 9) of the covering body 21, and is larger than the maximum width (such as the maximum diameter, see D1 in fig. 9) of the evacuation hole 10. A surface 42a of the intermediate pushing body 42 faces and presses towards the covering body 21. The intermediate pushing body 42 transfers the pushing force F1 to the covering body 21. The heater 7, such as radiation heater, such as a laser, heats the solidified seal material 22 to soften it. When the seal material 22 has softened and is thus not more solidified, the intermediate pushing body 42 transfers the force F1 from the clamping/pushing part 40 and thereby presses the covering body 21 further into the larger diameter portion 10b of the hole 10.

At some point, in some embodiments of the present disclosure, the pushing body 42 is displaced so that the surface 42a of the pushing body 42 reaches the major surface 2b of the glass sheet 2. This acts as a mechanical stop and prevents the pushing body 42 from pushing the covering body 21 further into the hole. In the embodiment illustrated in fig. 22, the pushing body 42 surface 42a is substantially plane and will provide that the surface 21b of the covering body 21 may be substantially flush with the glass sheet 2 surface 2b when the seal material 22 has been cooled.

In some embodiments of the present disclosure, gas evacuation channels 43 may be provided, such as cut or milled, into the surface 42a of the pushing body 42, see also fig. 22a. These channels 43 may provide predetermined gas GA flow paths also when the seal material 22 has been softened and the body 42 rests on the glass sheet surface 2b.

In some embodiments of the present disclosure, the clamping part 40 may be arranged opposite the evacuation hole 10, as e.g. illustrated in figs 2 and 22. In other embodiments (not illustrated), the clamping part 40 may be arranged at another location, such as opposite the glass sheet 2 surface 2b, and the pushing body 42 may be placed between the clamping part / pushing part 40 and the glass sheet 2 surface 2b.

It is generally understood that even though gaskets are not shown in figs. 2 and 22, it is understood that one or more gaskets 9x, such as e.g. annular gaskets, may be arranged between the evacuation cup 9 and the glass sheet 2 surface 2b in order to provide a tightening between the cup 9 body and the glass sheet 2.

Fig. 22a illustrates schematically a pushing body 42 according to embodiments of the present disclosure. The pushing body 42 may be used during VIG unit manufacturing as e.g. described above in relation to e.g. fig. 2 and/or 22. The view is towards the pushing surface 42a of the pushing body 42 that is configured to push the covering body 21. Predefined gas evacuation channels 43 are be provided in the surface 42a of the pushing body 42. The evacuation channels 43 may be obtained e.g. during manufacturing of the pushing body 42, such as by means of cutting, casting, machining, milling and/or the like. These evacuation channels 43 may provide predetermined gas GA flow paths also when the seal material 22 has been softened and the body 42 rests on the glass sheet surface 2b.

In fig. 22a, the surface 42a comprises six predefined channels that extends radially from the center of the pushing body 42. It is naturally under stood that in some embodiments, fewer than six or more than six channels 43 may be provided, such as between one channel 43 and sixteen channels, such as between two channels 43 and eight channels, such as between two channels and six channels, endpoints included.

The channels 43 may as illustrated extend to the outer boundary 42x of the pushing body 42 so that gas can enter through the side.

In other embodiments of the present disclosure (not illustrated), instead of the predefined channels 43, or in addition to the predefined channels 43, a surface roughness may be provided in at least a part of the surface 42a. This surface roughness may or may not be larger than the surface roughness of the covering body surface 21b and/or the surface roughness of the glass sheet 2 surface 2b. The surface roughness of the surface 42a which is configured to be arranged to face the covering body 21 surface 21b may be between 10 µm and 250 µm such as between 25 µm and 150 µm, such as between 45 µm and 100 µm. Said surface roughness may be the Ra or Rz surface roughness parameter, preferably the Ra parameter. The surface roughness may provide one or more gas evacuation channels, also when the pushing body 42 supports on the glass sheet surface 2b.

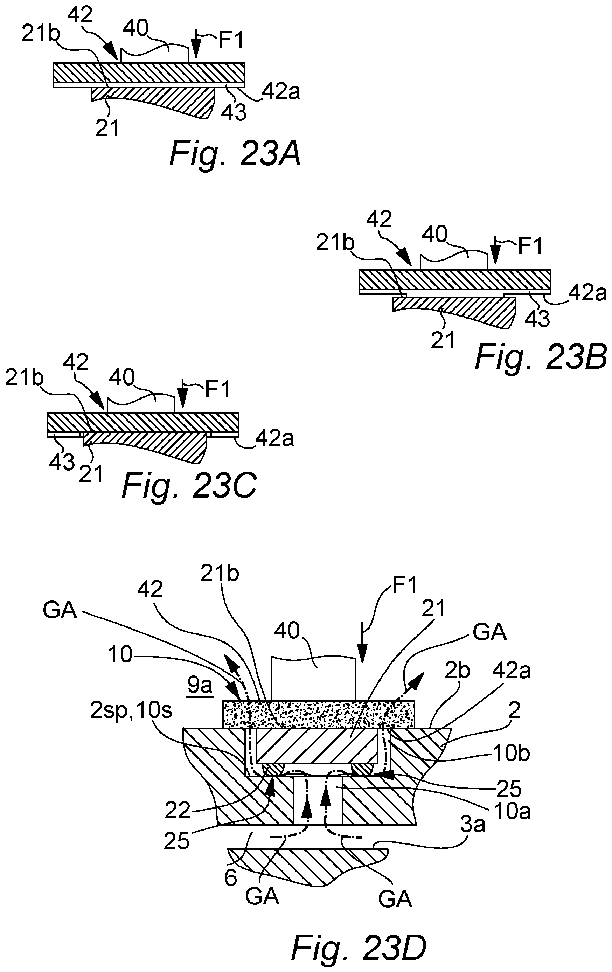

Figs. 23A-23D illustrates various embodiments of a pushing body 42 according to various embodiments of the present disclosure.

The pushing body in fig. 23A has a surface 42a configured so that when the support surface 42a of the pushing body support on the glass sheet 2 surface 2b, the surface of the covering body 21 will be substantially flush with the surface 2b of the glass sheet 2.

The pushing body 42 in fig. 23B comprises a protruding part for engaging with the surface 21b of the covering body 21. This provides that when the surface 42a 42a of the pushing body 42 support on the glass sheet 2 surface 2b, the surface 21b of the covering body 21 will be arranged below the surface 2b of the glass sheet 2.

The pushing body 42 in fig. 23C comprises a recessed part for engaging with the surface 21b of the covering body 21. This provides that when the surface 42a of the pushing body 42 supports on the glass sheet 2 surface 2b, the surface 21 b of the covering body 21 will be arranged above the surface 2b of the glass sheet 2. For example, the pushing body may be configured so that when the surface 42a of the pushing body 42 supports on the glass sheet 2 surface 2b, the surface 21b of the covering body 21 may be arranged between 0.1 and 1 mm, such as between 0.1 and 0.5 mm, for example between 0.2 and 0.4 mm above the surface 2b of the glass sheet 2.

In embodiments of the present disclosure, the evacuated gas may be evacuated through the pushing body 42.

In still further embodiments of the present disclosure, as illustrated in fig. 23D, the pushing body 42 may comprise or consist of a material structure which is pervious to the evacuated gas GA. Since the material structure may be pervious to the evacuated gas GA, the evacuated gas may be evacuated through openings such as pores of the pushing body 42 during evacuation, and into the cup interior 9a. Hence, even when the pushing body support on the glass sheet 2a surface, gas may be evacuated through at least a part of the pushing body 42. For example, the pushing body 42 may in some embodiments comprise a sintered part, such as a block, of material, for example sintered metal, sintered ceramics and/or sintered glass in order to obtain a body 42 part pervious to the evacuated gas. In some embodiments, a part of the pushing body 42 proximate the covering body 21 may be pervious to the evacuated gas GA, whereas a part of the pushing body 42 distant to the covering body 21 may be non-pervious to the evacuated gas. In other embodiments, substantially the entire pushing body may comprise or consist of the material structure pervious to the evacuated gas GA.

In still further embodiments of the present disclosure, the pushing body 42 may comprise one or more through holes (not illustrated), which guides the evacuated gas GA through the pushing body 42.

As can be seen in fig. 23D, the pushing body 42 may be displaced by the support on the glass sheet 2 surface 2b.

It is understood that in still further embodiments of the present disclosure, the pushing body 42 may not be pushed to a location where it support on the major glass sheet surface 2b. Instead, the clamping part /pushing part 40 may be configured to provide the desired force, and hence the pushing force F1 from the clamping part /pushing part 40 may determine the amount of displacement of the covering body 21 towards the support surface 10s. This may e.g. be obtained in combination with the properties, such as the softening properties, of the of the seal material 22. The heating temperature of the seal material 22 may be controlled by the heater (see ref. 7 of figs. 22 and 2), e.g. in order to obtain the desired seal material viscosity.

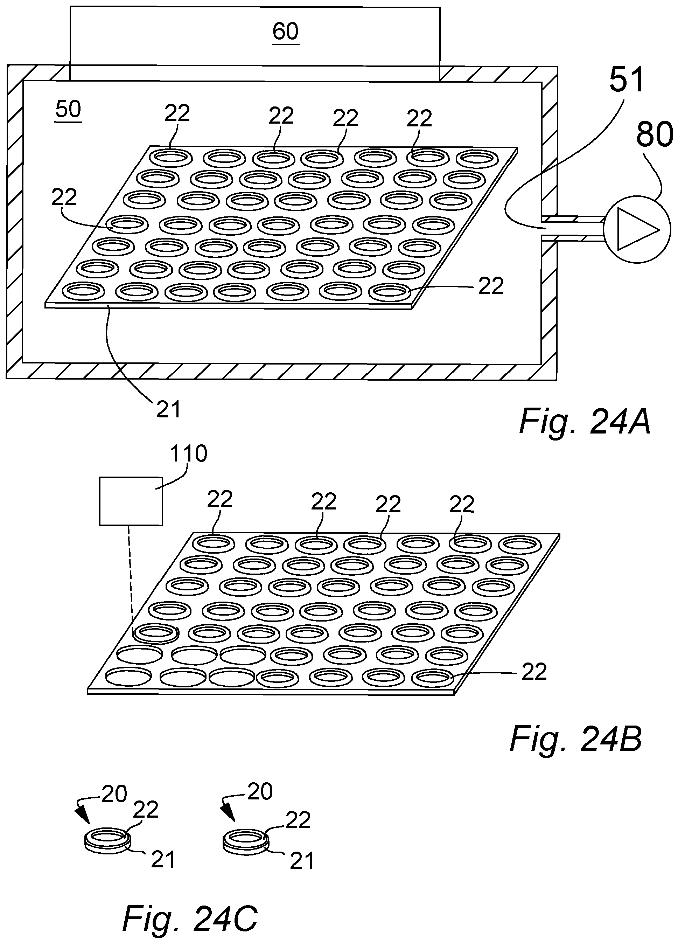

Figs. 24A-24C illustrates schematically an embodiment of the present disclosure, wherein a plurality of covers 20 are manufactured from and obtained from a single covering body workpiece 21. The workpiece 21 comprises a plurality of discretely arranged portions of seal material 22 which are distributed across a surface of the workpiece 21, such as a single glass sheet or metal sheet. The seal material portions may in some embodiments have a substantially identical size and shape, and a plurality of substantially identical covers 20 may be obtained from the same workpiece.

The seal material portions may e.g. be arranged onto the surface by means of a nozzle, by means of printing, such as 3D printing, may be applied applying by means of smearing and/or the like.

The covering body workpiece 21 with the seal material portions thereon is arranged in the working space 50.

The workpiece 21 with the discretely arranged seal material portions 22 disposed thereon is first heated (Fig. 24A) in the working space 50, e.g. as previously described, see e.g. fig. 50 and the description thereto. The seal material 22 is heated in the working space 50 to a target temperature Tar21 by means of a heater 60, e.g. as previously described, see e.g. one or more of figs. 13-16 and the description relating thereto. This may provide an outgassing of the seal material as e.g. previously described.

When the seal material portions 22 has been heated and outgassed, the heated glass solder material 22 and the covering body workpiece is cooled so as to solidify the glass solder material.

In fig. 24B, the covering body workpiece with the now fired, solidified seal material thereon is then processed further so as to obtain a plurality of covers from the single workpiece 21 comprising the solidified seal material. In this example, a cutter 110 is used for obtaining the covers 20. The cutter may e.g. comprise or be a laser cutter, a waterjet cutter, a saw, such as a band saw and/or the like.

The covers 20 obtained from said covering body workpiece 21 each comprises the solidified glass solder material 22. In the illustrated example, the solidified seal material may be attached to the covering body 21 and be configured to encompasses the through hole of the VIG unit assembly in an uninterrupted manner. In fig. 24A, the seal material obtains this by being a continuous ring of seal material.

Hence, each cover 20 will be cut from the workpiece 21 to comprises one of the discretely arranged solidified portions of the seal material. See fig. 24C.

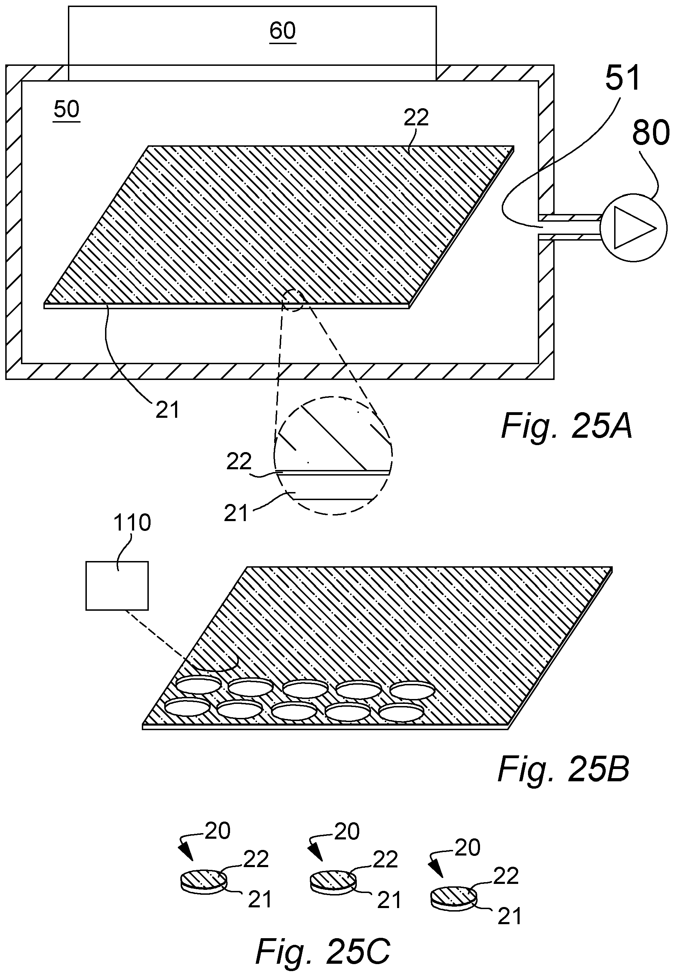

Figs. 25A-25C illustrates schematically further embodiments of the present disclosure, wherein a plurality of covers 20 are manufactured from a single covering body workpiece 21. Here, the seal material 22 at the workpiece 21 comprises or consist of a substantially continuous layer of seal material, such as a continuous layer of the glass solder material. This is heated in the working space 50 as e.g. previously disclosed, for example to outgas the seal material 22, and the entire workpiece 21 is then cooled to tool and solidify the seal material 21.

A plurality of covers 20 are obtained, such as cut by means of a cutter 110, from the workpiece 21 (see fig. 25B) so that a plurality, such as at least 5, at least 20 or at least 50, of the obtained covers 20 (se fig. 25C) comprises a part of the covering body workpiece 21 and a solidified seal material 22 originating from the continuous layer of seal material 22. In this embodiment, the solidified seal 22 material of the provided covers 20 is a continuous layer of seal material which extends over substantially the entire surface that is configured to face the evacuated gap.

It is understood that in further embodiments of the present disclosure (not illustrated), the workpiece 21 may comprise a plurality of discretely arranged portions of seal material, and a plurality of covers may be provided, such as cut, from an area of the workpiece 21 comprising one of the portions of the seal material.

It is generally understood that in some embodiments of the present disclosure, the seal material may be applied onto the workpiece to have a predetermined shape, such as e.g. according to a predetermined template. The template may be a physical template or a digital template that is stored on a data storage. A computer processor may be configured to control a printer, such as a 3D printer, control a nozzle and/or the like according to the digital template so as to apply the seal material onto the workpiece 21 in accordance with the template so as to obtain the desired seal material 22 layout on the workpiece 21.

It is understood that the workpiece 21 from which the covers are obtained in some embodiments of the present disclosure may be made from e.g. metal or glass, such as annealed glass.

The seal material 22 at the cover 20 in fig. 25c comprises a substantially continuous layer of solidified glass solder material, since it has been cut out from a covering body comprising continuous solidified seal material (see fig. 25B). In some embodiments, the seal material of the obtained covers may cover at least 50%, such as at least 70%, such as at least 90% of the surface of the covering body. In some embodiments, the seal material of the obtained covers may cover at least 95%, of the surface of the covering body.

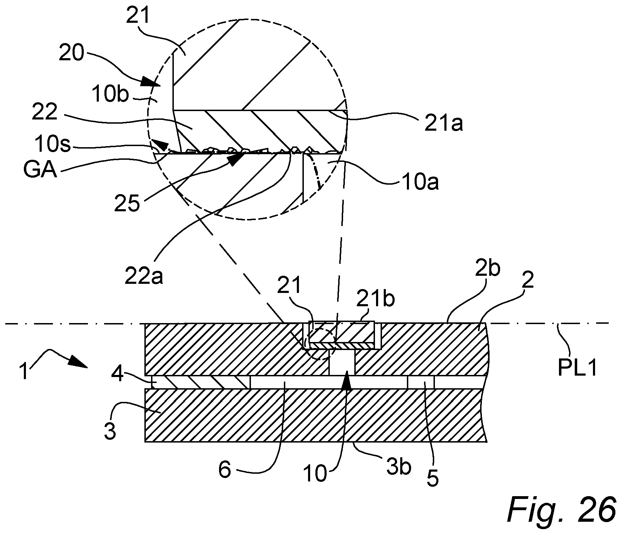

Fig. 26 illustrates schematically an embodiment of the present disclosure wherein a cover comprising a continuous layer of seal material is used for sealing the evacuated gap. As can be seen, the surface roughness of the seal material surface 22a may be sufficient to provide one or more gas passages 25 for the evacuated gas GA. Again, in some embodiments, the glass sheet surface 10s facing the seal material 22 may or may not have a surface roughness that helps to provide or increase the size of, gas passages 25. The surface roughness of the seal material 22 of the cover and/or the surface roughness of the glass sheet surface 10s may e.g. be as described above according to various embodiments of the present disclosure.

### Items

Various embodiments of the present disclosure is moreover described in the below items:
1. A method of manufacturing a vacuum insulated glass (VIG) unit (100), the method comprising:
   providing a vacuum insulated glass (VIG) unit assembly (1), wherein the vacuum insulated glass (VIG) unit assembly (1) comprises:
      - a first glass sheet (2) and a second glass sheet (3),
      - a plurality of support structures (5) distributed in a gap (6) between a first major surface (2a) of the first glass sheet (2) and first major surface (3a) of the second glass sheet (3),
      - a peripheral edge seal (4) which is configured to seal the gap (6),
      - wherein the first glass sheet (2) comprises a through hole (10), wherein the through hole (10) extends between the first major surface (2a) and a second, oppositely directed, major surface (2b) of the first glass sheet (2),
   providing a cover (20) comprising a covering body (21) and a solidified seal material (22), wherein the solidified seal material (22) comprises glass solder material which is attached to the covering body (21), such as wherein the glass solder material encompass the through hole (10) in an uninterrupted manner,
   arranging the cover (20) so that the solidified seal material (22) is placed between a surface part (2sp, 10s) of the first glass sheet (2) and the covering body (21), and so that the covering body (21) covers at least a part (10a) of the through hole (10),
   evacuating the gap (6) of the heated vacuum insulated glass (VIG) unit assembly (1) by means of a pump (30), so that gas (GA), such as air, in the gap (6) is evacuated through the through hole (10),
   heating the solidified seal material (22) by means of a heater (7) so as to soften the solidified seal material, thereby providing that the softened seal material (22) adhere to the first glass sheet (2) around the through hole (10),
   cooling the softened seal material (22) so as to harden the softened seal material, thereby sealing the evacuated gap (6).
2. Method according to item 1, wherein said evacuation of the gap (6) by means of the pump (30) comprises that the gas (GA) is evacuated from the gap (6) through one or more gas passages (25), wherein the one or more gas passages (25) is/are arranged between said surface part (2sp, 10s) of the first glass sheet (2) and a surface (22a) of the solidified seal material (22) which faces said surface part (2sp, 10s) of the first glass sheet (2).
3. Method according to item 2, wherein the surface (22a) of the solidified seal material (22) supports, such as directly supports, on the surface part (2sp, 10s) of the first glass sheet (2) during said evacuation of the gap (6) by means of the pump (30).
4. Method according to item 2 or 3, wherein at least 80%, such as at least 95%, such as at least 98%, of the evacuated gas (GA) is evacuated through said one or more gas passages (25).
5. Method according to any of items 2-4, wherein said one or more gas passages (25) is/are provided as a consequence of a surface roughness of the surface (22a) of the solidified seal material (22).
6. Method according to any of items 2-5, wherein said one or more gas passages (25) is/are provided as a consequence of a surface roughness of said surface part (2sp, 10s) of the first glass sheet (2).
7. Method according to any of items 2-6, wherein said one or more gas passages (25) is/are provided as a consequence of a combination of the surface roughness of the surface (22a) of the solidified seal material (22) and the surface roughness of said surface part (2sp, 10s) of the first glass sheet (2).
8. Method according to item 5 or 7, wherein the surface roughness of the surface (22a) of the solidified seal material (22) which faces said surface part (2sp, 10s) of the first glass sheet (2) is above 10 µm, such as above 25 µm, such as above 35 µm,
   such as wherein said surface roughness is the Ra or Rz surface roughness parameter, preferably the Ra parameter.
9. Method according to item any of items 5, 7 or 8, wherein the surface roughness of the surface (22a) of the solidified seal material (22) which faces said surface part (2sp, 10s) of the first glass sheet (2) is between 10 µm, and 150 µm such as between 25 µm and 100 µm, such as between 35 µm and 80 µm,
   such as wherein said surface roughness is the Ra or Rz surface roughness parameter, preferably the Ra parameter.
10. Method according to any of items 6-9 wherein the surface roughness of the surface part (2sp, 10s) of the first glass sheet which faces the solidified seal material (22) is above 10 µm, such as above 25 µm, such as above 35 µm,
   such as wherein said surface roughness is the Ra or Rz surface roughness parameter, preferably the Ra parameter.
11. Method according to any of items 6-10, wherein the surface roughness of the surface part (2sp, 10s) of the first glass sheet (2) which faces the solidified seal material (22) is between 10 µm, and 150 µm such as between 25 µm and 100 µm, such as between 35 µm and 75 µm,
   such as wherein said surface roughness is the Ra or Rz surface roughness parameter, preferably the Ra parameter.
12. Method according to any of items 5-11, wherein said surface roughness of the surface (22a) of the solidified seal material (22) is obtained as a result of a pre-heating (60) of the seal material (22) of the cover (20) so as to soften, such as liquify, the seal material (22), and
   a subsequent pre-cooling of the softened seal material (22) so as to solidify the softened seal material.
13. Method according to item 12, wherein said pre-heating (60) comprises heating the glass solder material (22) of the cover (20) to a temperature above the rated glass transition temperature (Tg) of the glass solder material (22).
14. Method according to any of items 5-13, wherein said surface roughness of the seal material (22) surface (22a) of the cover (20) is the surface roughness over at least 90%, such as at least 95%, such as at least 98% of the surface area of the solidified seal material (22) surface (22a) which is unbonded to the surface (21 a) of the covering body (21).
15. Method according to any of the preceding items, wherein the solidified seal material (22) comprises a pre-fired (60) glass solder material,
   and/or
   wherein said solidified seal material (22) has a height (H22), such as a maximum height, of less than 0.6 mm, such as less than 0.4 mm, such as less than 0.3 mm.
16. Method according to any of the preceding items, wherein the height (H22), such as local maximum height, of the solidified seal material (22) varies less than 0.1 mm, such as less than 0.05 mm, for example less than 0.03 mm over the entire extent (22e) of the seal material (22).
17. Method according to any of items 5-16, wherein the surface roughness of the seal material (22) surface (22a) is provided by means of protrusions at/in the surface (22a) of the seal material (22) of the cover (20), wherein said protrusions are arranged staggered, such as substantially randomly, across the surface of the glass solder material (22).
18. Method according to any of the preceding items, wherein the solidified seal material (22) comprises or consist of a continuous ring of seal material (2), such as a continuous, annular ring of seal material.
19. Method according to any of the preceding items, wherein the solidified seal material (22), prior to said heating of the solidified seal material (22) by means of said heater (7), is in continuous, un-interrupted contact with, and continuously adheres to, the covering body (21) surface (21a) over substantially the full extent (22e), such as the full length, of the continuous ring of seal material (2).
20. Method according to any of the preceding items, wherein the method comprises providing said through hole (10), such as the full through hole, in the first glass sheet (2), wherein said providing of the through hole (10) comprises laser cutting at least a part of the through hole in the first glass sheet (2),
   wherein said laser cutting is conducted prior to or during assembling of the vacuum insulated glass (VIG) unit assembly (1).
21. Method according to item 20, wherein the first glass sheet (2) is a tempered glass sheet, such as a thermally tempered glass sheet, and wherein said laser cutting is provided prior to tempering of the first glass sheet (2).
22. Method according to any of the preceding items, wherein a clamping force (F1) is provided by means of a clamping part (40), such as a pushing part, so as to force the covering body (21) towards said surface part (2sp 10s) of the first glass sheet (2), such as during and/or after said heating of the solidified seal material (22) provided so as to soften the solidified seal material.
23. Method according to item 22, wherein said clamping force (F1) is configured to keep the cover (20) at a desired cover space (10b) over the through hole (10a, 10) , such as during said evacuation of the gap (6) and/or during moving of the Vacuum Insulated Glass unit assembly (1).
24. Method according to item 22 or 23, wherein the clamping force (F1) directly or indirectly pushes the covering body (21), such as so as to deform the softened seal material (22).
25. Method according to any of items 22-24, wherein the clamping force (F1) pushes the covering body (21) so as to provide that a part of the softened seal material (22) moves in between a side surface (21c) of the covering body (21) and a side surface (10bs) of the first glass sheet which faces the side surface (21c) of the covering body (21).
26. Method according to any of items 22-25, wherein the clamping part (40) comprises a spring configured to provide said clamping force (F1).
27. Method according to any of the preceding items, wherein the method comprises arranging an evacuation cup (9), such as on the second surface (2b) of the first glass sheet, so as to cover the through hole,
   wherein said evacuation of the gap (6) comprises evacuating the gap by means of a pump (30) which is in fluid communication (30a) with an interior cavity (9a) of the evacuation cup (9).
28. Method according to item 22 and 27, wherein the clamping part (40) is arranged inside the evacuation cup (9), such as is attached to a housing (9b) of the evacuation cup.
29. Method according to any of items 27-28, wherein said heating and softening of the peripheral edge seal (4) material is provided while the evacuation cup (9) evacuates the gap (6), thereby providing a clamping of the peripheral edge seal (4) material by means of a pressure difference between the gap (6) and the exterior of the vacuum insulated glass unit assembly (1).
30. Method according to any of the preceding items, wherein said heating of the solidified seal material (22) of the cover (20) so as to soften the solidified seal material (22) to provide that the seal material adhere to the surface part of the first glass sheet (2) around the through hole (10) comprises heating by radiation heating provided by means of a radiation heater (7) which emits a heating beam (7a).
31. Method according to item 30, wherein said radiation heater (7) comprises a laser, and wherein said heating beam (7a) is a laser beam.
32. Method according to any of items 30-31, wherein the second glass sheet (3) is placed between the radiation heater (7) and the seal material (22) of the cover (20), so that the seal material (22) of the cover (20) is heated by means of a heating beam which is radiated through the second glass sheet (3).
33. Method according to any of the preceding items, wherein said heating (7) of the solidified seal material (22) of the cover (20) so as to soften the solidified seal material (22) comprises heating to a temperature above the glass transition temperature (Tg) of the seal material (22).
34. Method according to any of the preceding items, wherein the through hole (10) is a stepped through hole comprising a smaller diameter portion (10a) and a larger diameter portion (10b),
   wherein the larger diameter portion (10b) is arranged proximate the second surface (2b) of the first glass sheet (2) and wherein the smaller diameter portion (10a) is arranged proximate the gap (6),
   a step surface (10s, 2sp) arranged between the larger diameter portion (10b) and the smaller diameter portion (10a),
   wherein said arranging of the cover (20) comprises arranging the solidified seal material (22) opposite to, such as so as to support on, the step surface (10s, 2sp) so that the covering body (21) is arranged in the larger diameter portion (10b) and covers the smaller diameter portion (10a).
35. Method according to item 34, wherein the diameter (D1) of the larger diameter portion (10b) is at least 2 mm, such as at least 3 mm, larger than the diameter (D2) of the smaller diameter portion (10a)
   and/or
   wherein the diameter (D1) of the larger diameter portion (10b) is between 5 mm and 12 mm, such as between 6 mm and 9 mm.
36. Method according to item 34 or 35, wherein the diameter (D3) of the covering body (21) is smaller than the diameter (D1) of the larger diameter portion (10b),
   wherein the difference in diameter (D1-D3) between the diameter (D3) of the covering body (21) and the diameter (D1) of the larger diameter portion (10b) is less than 1 mm, such as less than 0.6 mm, such as less than 0.4 mm.
37. Method according to any of the preceding items, wherein the thickness (H2) of the covering body (21) is 2.5 mm or less, such as 1.5 mm or less,
   and/or
   wherein the thickness (H2) of the covering body (21) is between 0.7 mm and 2.9 mm, such as between 0.9 mm and 2.4 mm, such as between 1.6 mm and 2.2 mm (endpoints included).
38. Method according to any of items 34-37, wherein the depth (DE1) of the larger diameter portion (10b) extends over less than 70%, such as over less than 60%, such as over less than 50%, of the thickness (TH1) of the first glass sheet (2),
   and/or
   wherein the depth (DE1) of the larger diameter portion (10b) is between 20% and 70%, such as between 30% and 60%, such as between 40% and 50% of the thickness (TH1)of the first glass sheet (2).
39. Method according to any of items 34-38, wherein the depth (DE1) of the larger diameter portion (10b) is between 1 mm and 4 mm, such s between 1.5 mm and 3 mm, such as between 1.9 mm and 2.5 mm.
40. Method according to any of items 34-39, wherein the depth (DE1), such as the maximum depth, of the larger diameter portion (10b) is between 0.05 mm and 0.35 mm larger, such as between 0.15 and 0.25 mm, larger than the thickness (H2), such as the maximum thickness, of the covering body (21).
41. Method according to any of the preceding items, wherein the maximum thickness (H3) of the seal material (22) between the covering body (21) and said surface part (2sp, 10s) of the first glass sheet (2), after said sealing of the gap (6), is between 0.050 mm and 0.4 mm, such as between 0.075 mm and 0.3 mm, such as between 0.125 mm and 0.250 mm.
42. Method according to any of the preceding items, wherein the first glass sheet (2) and/or the second glass sheet (3) has/have a thickness (TH1) between 2 mm and 5 mm, such as between 3 mm and 4 mm (both endpoints included).
43. Method according to any of the preceding items, wherein the thickness (H2) of the covering body (21) is at least 30% lower, such as at least 50% lower, or at least 60% lower, than the thickness (TH1) of the first glass sheet (2),
   and/or
   wherein the thickness of the covering body (21) is between 30% and 85% lower, such as between 40% and 60% lower, such as between 45% and 55% lower, than the thickness (TH1) of the first glass sheet (2).
44. Method according to any of items 34-43, wherein the thickness of the covering body (21) fulfills one or more of the below criteria:
   e) wherein the thickness (H2) of the covering body (21) is lower than the depth (DE1) of the larger diameter portion (10b),
   f) wherein the thickness (H2) of the covering body (21) is at least 5% lower or at least 10% lower, than the depth (DE1) of the larger diameter portion (10b),
   g) wherein the thickness (H2) of the covering body (21) is between 3% and 30% lower, such as between 5% and 20% lower, such as between 8% and 15% lower than the depth (DE1) of the larger diameter portion (10b),
   h) wherein the thickness (H2) of the covering body (21) is between 30% and 85% lower, such as between 40% and 60% lower, such as between 45% and 55% lower, than the thickness (TH1) of the first glass sheet (2).
45. Method according to any of the preceding items, wherein the method of manufacturing the vacuum insulated glass (VIG) unit comprises laminating the vacuum insulated glass (VIG) unit (100),
   wherein said laminating of the vacuum insulated glass (VIG) unit (100) comprises attaching a lamination glass sheet (8) to the second major surface (2b) of the first glass sheet (2) by means of a lamination interlayer (8a) so that the lamination glass sheet (8) extends over and covers the cover (20) and the through hole (10).
46. Method according to any of the preceding items, wherein the covering body (21), after said cooling the softened seal material (22) so as to harden the softened seal material to seal the evacuated gap (6), extends through a plane (PL1) comprising the second major surface (2b) of the first glass sheet (2).
47. Method according to item 45 and 46, wherein the covering body (21) extend into the lamination interlayer (8a), and/or wherein the lamination interlayer (8a) has a thickness of at least 0.4 mm, such as at least 0.6 mm, such as at least 0.7 mm,.
48. Method according to item 45, wherein the surface (21b) of the covering body (21) which faces away from the seal material (22) is at a level below the second surface (2b) of the first glass sheet (2) after said cooling of the softened seal material (22) so as to seal the evacuated gap (6), and wherein the lamination interlayer (8a) extends into the through hole, such as into a larger diameter portion (10b) of the through hole (10).
49. Method according to any of the preceding items, wherein the first glass sheet (2) and/or the second glass sheet (3) is/are a tempered glass sheet (2) such as a thermally tempered glass sheet.
50. Method according to any of the preceding items, wherein the covering body (21) comprises or consist of a structural glass body.
51. Method according to any of the preceding items, wherein, at the final vacuum insulated glass unit (100), the surface (21b) of the covering body (21) which faces away from the gap (6) is configured to be arranged less than 1 mm, such as less than 0.6 mm, for example less than 0.4 mm, from a plane (PL1) defined by the second major surface (2b) of the first glass sheet (2),
   and/or
   wherein the surface (21 b) of the covering body (21) which faces away from the gap (6) and the sealing material (22) is arranged substantially flush with or below the second major surface (2b) of the first glass sheet (2).
52. Method according to any of the preceding items, wherein said providing of the vacuum insulated glass (VIG) unit assembly (1) comprises heating the peripheral edge seal (4) material, such as a solder glass edge seal material, so as to soften the a peripheral edge seal (4) material, and
   cooling the peripheral edge seal (4) material so as to solidify the peripheral edge seal (4) material to obtain a permanent, airtight peripheral edge seal (4).
53. Method according to any of the preceding items, wherein the vacuum insulated glass (VIG) unit assembly (1) with the cover (20) is heated in a in a furnace (70).
54. Method according to any of the preceding items, wherein the method comprises heating the vacuum insulated glass (VIG) unit assembly (1) in a heating furnace (70) chamber (71) to a temperature above 200°C, such as above 280°C, such as above 320°C, such as by means of convection heating and/or conduction heating, prior to said heating the solidified seal material (22) by means of a heater (7) so as to soften the solidified seal material.
55. Method according to any of the preceding items, wherein said heating in the heating furnace (70) chamber (71) softens the peripheral edge seal material (4), and/or
   wherein said heating in the heating furnace (70) chamber (71) heats the peripheral edge seal material (4) to a temperature above the glass transition temperature of the peripheral edge seal material (4).
56. Method according to any of the preceding items, wherein the providing of the cover (20) comprises manufacturing the cover (20),
   wherein said manufacturing of the cover (20) comprises the steps of:
   - providing one or more covering body workpieces (21), such as one or more covering body discs,
   - applying a seal material comprising a glass solder material (22) to the provided covering body workpiece(s) (21, 21a),
   - arranging the covering body workpiece (21) with the applied seal material (22) in a working space (50),
   - heating at least the applied seal material (22) in the working space (50) by means of a heater (60), such as by means of a radiation heater or a laser, wherein said heating is provided so as to soften the applied glass solder material (22) so as to provide an outgassing of the applied glass solder material,
   - cooling the heated covering body workpiece (21) and applied glass solder material (22) so as to solidify the glass solder material (22).
57. Method according to item 56, wherein the working space (50) is a vacuum chamber (50), and wherein the pressure in the vacuum chamber (50) is reduced by means of a pump (80) during at least said heating of the applied glass solder material (22).
58. Method according to any of the preceding items, wherein said providing of the cover (20) comprises picking or ejecting, such as dropping, said cover (20) comprising the covering body (21) and the solidified seal material (22).
59. Method according to any of the preceding items, wherein the amount of binder material in the solidified seal material (22) is below 5 wt%, such as below 2 wt%, such as below 1 wt%
60. Method according to any of the preceding items, wherein the amount of solvent in the solidified seal material (22) is below 4% wt%, such as below 2 wt%, such as below 1 wt%.
61. Method of manufacturing one or more covers (20) for use, such as subsequent use, during sealing of an evacuated gap (6) of a vacuum insulated glass unit (1), for example wherein the cover (20) is a cover (20) according to any of the preceding items wherein said method comprises:
   - providing one or more covering body workpieces (21), wherein said one or more covering body workpieces (21) comprises a seal material (22) comprising a glass solder material (22), wherein the seal material (22) is arranged at a surface (21a) of the one or more covering body workpieces (21),
   - arranging the one or more covering body workpieces (21) in a working space (50),
   - heating the seal material (22) in the working space (50) to a target temperature (Tar21) by means of a heater (60), wherein said heating is provided so as to provide an outgassing of the glass solder material,
   - cooling the one or more heated covering body workpieces (21) and seal material (22) so as to solidify the seal material (22),
   - obtaining one or more covers (20) from the one or more cooled covering body workpieces (21).
62. Method according to item 61, wherein said heating of the applied glass solder material (22) is provided so as to soften, such as liquify, the applied glass solder material (22), such as so as to provide said outgassing.
63. Method according to item 61 or 62, wherein said heating of the applied seal material (22) comprises heating to a temperature above 200°C, such as above 300°C, such as above 350°C,
   and/or
   wherein said heating of the applied seal material (22) comprises heating to a temperature between 200°C and 450°C, such as between 300°C and 400°C, such as between 320°C and 370°C.
64. Method according to any of items 61-63, wherein said working space (50) is a vacuum chamber, and wherein the pressure is reduced in the vacuum chamber (50), such as by means of a pump (80), such as at least while said applied glass solder material (22) is heated in the vacuum chamber.
65. Method according to item 64, wherein said reducing of the pressure in the vacuum chamber (50) comprises reducing the pressure in the vacuum chamber (50) to a pressure below 500 mbar, such as below 100 mbar, such as below 10 mbar
   and/or
   wherein said reducing of the pressure in the vacuum chamber (50) comprises reducing the pressure in the vacuum chamber (50) to a pressure between 10 ⁻³ millibar and 500 millibar, such as between 10 ⁻² millibar and 100 millibar.
66. Method according to item 64 or 65, wherein the method comprises equalizing said pressure in the vacuum chamber (50), such as during or after said cooling.
67. Method according to any of items 61-66, wherein said heating (60) comprises heating the glass solder material (22) of the one or more covering body workpieces (21) to a temperature above the rated glass transition temperature (Tg) of the glass solder material (22).
68. Method according to any of items 61-67, wherein the heater (60) comprises a conduction heater and/or a convection heater,
   and/or
   wherein the heater (60) heats a conduction heating part (95), such as a base, configured to heat the one or more covering body workpieces (21) so that the covering body workpiece (21) heats the seal material (21).
69. Method according to any of items 61-68, wherein the heater (60) comprises a radiation heater, such as a laser.
70. Method according to any of items 61-69, wherein the temperature (T21) of the seal material (22) is increased in the working chamber (50) with a heat increase rate of less than 2 °C/minute, such as less than 1 °C/minute or less than 0.7 °C/minute during the heating time (Ht21) until the target temperature (Tar21) is reached.
71. Method according to item 70, wherein said heat increase rate is provided over at least 50%, such as over at least 70% or over at least 95% of said heating time (Ht21).
72. Method according to item 70 or 71, wherein said heat increase rate is provided at least over the first 50%, such as at least over the first 70% or at least over the first 95% of said heating time (Ht21).
73. Method according to any of items 61-72, wherein the heating time (Ht21) before the seal material (22) reaches the target temperature (Tar21) is at least 3 hours, such as at least 5 hours, such as at least 8 hours.
74. Method according to any of items 61-73, wherein the temperature (T21) of the seal material (21) is increased in the working space with a heat increase rate of between 0.1 °C/minute and 5 °C/minute, such as between 0.1 °C/minute and 2 °C/minute, such as between 0.3 °C/minute and 0.7 °C/minute.
75. Method according to any of items 61-74, wherein the entire seal material (22), such as the full mass of the seal material (22) is heated to said target temperature (Tar21), such as
   wherein said heating (60) comprises heating the entire glass solder material (22) of the cover (20) to a temperature above the rated glass transition temperature (Tg) of the glass solder material (22).
76. Method according to any of items 61-75, wherein the amount of binder material in the solidified seal material (22) is below 5 wt%, such as below 2 wt%, such as below 1 wt%,
   and/or
   wherein the amount of binder material in the solidified seal material (22) is between 0.1 wt% and 5 wt%, such as between 0.4 wt% and 2 wt%.
77. Method according to any of items 61-76, wherein the amount of solvent in the solidified seal material (22) is below 4 wt%, such as below 2 wt%, such as below 1 wt%.
78. Method according to any of items 61-77, wherein said heating by means of said heater (60) reduces the amount of binder material in the seal material (22), such as by at least 10 %, such as by at least 50 %, such as by at least 85 % when compared to the amount (wt%) of binder material in the seal material before said heating by means of the heater (60),
   and/or
   wherein, the amount of binder material in the seal material (22) after it has been heated by the heater 60 and solidified by cooling it 22, is above 0.1 wt%, such as above 0.4 wt%, such as above 1 wt%,
      and/or
   wherein the amount of binder material in the seal material (22) after it has been heated by the heater (60) and solidified by cooling it (22), is between 0.1 wt% and 5 wt%, such as between 0.4 wt% and 2 wt%.
79. Method according to any of items 61-78, wherein said heating by means of said heater (60) reduces the amount of solvent material in the seal material (22) by at least 40%, such as by at least 80%, such as by at least 95% when compared to the amount of solvent material in the seal material before said heating by means of the heater (60).
80. Method according to any of items 61-79, wherein said providing of the one or more covering body workpieces (21) comprises applying the glass solder material (22) to a surface (21a) of the one or more covering body workpieces (21).
81. Method according to any of items 61-80, wherein a surface roughness of the surface (22a) of the solidified seal material (22) which faces away from the surface (21a) of the work piece (21) on which the seal material is arranged is above 10 µm, such as above 25 µm, such as above 35 µm,
   such as wherein said surface roughness is the Ra or Rz surface roughness parameter, preferably the Ra parameter,
      and/or
   wherein the surface roughness of the surface (22a) of the solidified seal material (22) which faces away from the surface (21a) of the work piece (21) on which the seal material is arranged is between 10 µm, and 150 µm such as between 25 µm and 100 µm, such as between 35 µm and 80 µm,
   such as wherein said surface roughness is the Ra or Rz surface roughness parameter, preferably the Ra parameter.
82. Method according to any of items 61-81, wherein said surface roughness of the surface (22a) of the solidified seal material (22) is obtained as a result of said heating (60) of the seal material (22) of the cover (20) by means of the heater (60) and the subsequent cooling of the softened seal material (22) so as to solidify the softened seal material.
83. Method according to any of items 61-82, wherein said surface roughness of the seal material (22) surface (22a) is the surface roughness over at least 90%, such as at least 95%, such as at least 98% of the surface area of the solidified seal material (22) surface (22a) which is unbonded to a surface (21a) of the covering body (21).
84. Method according to any of items 61-83, wherein said solidified seal material (22) has a height (H22), such as a maximum height, of less than 0.6 mm, such as less than 0.4 mm, such as less than 0.3 mm.
85. Method according to any of items 61-84, wherein the height (H22), such as local maximum height, of the solidified seal material (22) varies less than 0.1 mm, such as less than 0.05 mm, for example less than 0.03 mm over the entire extent (22e) of the seal material (22).
86. Method according to any of items 61-85, wherein the surface roughness of the seal material (22) surface (22a) is provided by means of protrusions at/in the surface of the seal material (22) of the cover (20), wherein said protrusions are arranged staggered, such as substantially randomly, across the surface of the glass solder material (22).
87. Method according to any of items 61-86, wherein the solidified seal material (22) comprises or consist of a continuous ring of seal material (2), such as a continuous, annular ring of seal material.
88. Method according to any of items 61-87, wherein the solidified seal material (22) is in continuous, un-interrupted contact with, and continuously adheres to, the covering body (21, 21a) over substantially the full extent (22e), such as the full length, of the continuous ring of seal material (2).
89. Method according to any of items 22-26, wherein a pushing body (42) is arranged between the clamping part (40) and the covering body (21), wherein a part, such as a surface (42a), of the pushing body (42) is configured to acts as a mechanical stop so as to prevent the pushing body (42) from pushing the covering body 21 further into the hole.
90. Method according to item 89, wherein the pushing body (42) is larger than the maximum width (D1), such as the maximum diameter, of the evacuation hole (10), wherein said part (42a) of the pushing body (42) is configured to support on the second major surface (2b) of the first glass sheet (2).
91. Method according to any of items 61-88, wherein said obtaining of one or more covers (20) from the cooled covering body workpieces comprises providing a plurality of covers (20) from a single covering body workpiece (21) of the one or more covering body workpieces (21), such as by means of a cutter (110), such as by means of a laser,
   wherein each cover (20) obtained from said covering body workpiece (21) comprises said solidified glass solder material (22).
92. Method according to item 91, wherein the seal material at one or more of the one or more covering body workpieces comprises or consist of a continuous layer of seal material (22), such as a continuous layer of the glass solder material, and
   wherein a plurality of covers (20) are obtained, such as cut, from the workpiece (21) so that each of the obtained covers (20) comprises a part of the covering body workpiece and a seal material (22) originating from the continuous layer of seal material (22).
93. Method according to item 91, wherein the seal material (22) at one or more of the one or more covering body workpieces comprises or consist of a plurality of discretely arranged portions of seal material (22) which are distributed across a surface of the workpiece (21), and
   wherein a plurality of covers (20) are obtained, such as cut, from the workpiece (21) so that each of the obtained covers (20) comprises a part of the covering body workpiece and a solidified seal material, wherein the solidified seal material of the cover (20) comprises at least one of said discretely arranged solidified portions of the seal material (22)
94. Method according to any of items 61-88, wherein said providing of the one or more covering body workpieces (21) comprises providing a plurality of individual covering body workpieces (21), wherein each individual covering body workpiece comprises a portion of said seal material to be heated,
   wherein said individual covering body workpieces (21) each are configured to constitute a cover (20), such as a single cover, when the seal material has been solidified.
95.Use of a cover (20) according to any of items 61-88 or any of claims 91-94 for covering and sealing of an evacuation hole (10) in a glass sheet (2) of a vacuum insulated glass unit (1) so as to seal an evacuated gap (6) of the vacuum insulated glass unit (1).
96. A method according to any of items 1-60, wherein said cover (20) is a cover which is manufactured according to the method of any of items 61-88 and/or 89-94.

## Claims

1. A method of manufacturing a vacuum insulated glass (VIG) unit (100), the method comprising:
providing a vacuum insulated glass (VIG) unit assembly (1), wherein the vacuum insulated glass (VIG) unit assembly (1) comprises:
- a first glass sheet (2) and a second glass sheet (3),
- a plurality of support structures (5) distributed in a gap (6) between a first major surface (2a) of the first glass sheet (2) and first major surface (3a) of the second glass sheet (3),
- a peripheral edge seal (4) which is configured to seal the gap (6),
- wherein the first glass sheet (2) comprises a through hole (10), wherein the through hole (10) extends between the first major surface (2a) and a second, oppositely directed, major surface (2b) of the first glass sheet (2),
providing a cover (20) comprising a covering body (21) and a solidified seal material (22), wherein the solidified seal material (22) comprises glass solder material, wherein the solidified seal material is attached to the covering body (21, 21a) and encompasses the through hole (10) in an uninterrupted manner,
arranging the provided cover (20) so that the solidified seal material (22) is placed between a surface part (2sp, 10s) of the first glass sheet (2) and the covering body (21), and so that the covering body (21) covers at least a part (10a) of the through hole (10),
evacuating the gap (6) by means of a pump (30), so that gas (GA), such as air, in the gap (6) is evacuated through the through hole (10),
heating the solidified seal material (22) of the arranged cover (20) by means of a heater (7) so as to soften the solidified seal material, thereby providing that the softened seal material (22) adhere to the surface part (2sp, 10s) of the first glass sheet (2) around the through hole (10),
cooling the softened seal material (22) so as to harden the softened seal material, thereby sealing the evacuated gap (6),
wherein said evacuation of the gap (6) by means of the pump (30) comprises that the gas (GA) is evacuated from the gap (6) through one or more gas passages (25),
wherein the one or more gas passages (25) is/are arranged between said surface part (2sp, 10s) of the first glass sheet (2) and a surface (22a) of the solidified seal material (22) which faces said surface part (2sp, 10s) of the first glass sheet (2).

2. Method according to claim 1, wherein the surface (22a) of the solidified seal material (22) supports, such as directly supports, on the surface part (2sp, 10s) of the first glass sheet (2) during said evacuation of the gap (6) by means of the pump (30).

3. Method according to any of the preceding claims, wherein at least 80%, such as at least 95%, such as at least 98%, of the evacuated gas (GA) is evacuated through said one or more gas passages (25).

4. Method according to any of the preceding claims, wherein said one or more gas passages (25) is/are provided as a consequence of a surface roughness of the surface (22a) of the solidified seal material (22).

5. Method according to claim 4, wherein the surface roughness of the surface (22a) of the solidified seal material (22) which faces said surface part (2sp, 10s) of the first glass sheet (2) is above 10 µm, such as above 25 µm, such as above 35 µm,
and/or
wherein the surface roughness of the surface (22a) of the solidified seal material (22) which faces said surface part (2sp, 10s) of the first glass sheet (2) is between 10 µm, and 150 µm such as between 25 µm and 100 µm, such as between 35 µm and 80 µm, such as wherein said surface roughness is the Ra or Rz surface roughness parameter, preferably the Ra surface roughness parameter.

6. Method according to any of the preceding claims, wherein said one or more gas passages (25) is/are provided as a consequence of a surface roughness of said surface part (2sp, 10s) of the first glass sheet (2),
such as wherein said one or more gas passages (25) is/are provided as a consequence of a combination of the surface roughness of the surface (22a) of the solidified seal material (22) and the surface roughness of said surface part (2sp, 10s) of the first glass sheet (2).

7. Method according to any of the preceding claims, wherein the surface roughness of the surface part (2sp, 10s) of the first glass sheet which faces the solidified seal material (22) is above 10 µm, such as above 25 µm, such as above 35 µm,
and/or
wherein the surface roughness of the surface part (2sp, 10s) of the first glass sheet (2) which faces the solidified seal material (22) is between 10 µm, and 150 µm such as between 25 µm and 100 µm, such as between 35 µm and 75 µm,
such as wherein said surface roughness is the Ra or Rz surface roughness parameter, preferably the Ra parameter.

8. Method according to any of the preceding claims, wherein the height (H22), such as the local maximum height, of the solidified seal material (22) varies less than 0.2 mm, such as less than 0.1 mm, such as less than 0.05 mm over the entire extent (22e), such as the entire length, of the seal material (22).

9. Method according to any of the preceding claims, wherein the solidified seal material (22) which encompass the through hole (10) in an uninterrupted manner comprises or consist of a continuous ring of seal material (22), such as a continuous, annular ring of seal material such as the glass solder material.

10. Method according to any of the preceding claims, wherein the solidified seal material (22) comprises a pre-fired (60) glass solder material,
such as a pre-fired (60) glass solder material that has been subjected to a pre-firing (60) at the covering body (21) prior to said arranging of the cover (20).

11. Method according to any of the preceding claims, wherein the method comprises providing said through hole (10), such as the full through hole, in the first glass sheet (2), wherein said providing of the through hole (10) comprises laser cutting at least a part of the through hole in the first glass sheet (2),
such as wherein said laser cutting is conducted prior to or during assembling of the vacuum insulated glass (VIG) unit assembly (1).

12. Method according to any of the preceding claims, wherein a clamping force (F1) is provided by means of a clamping part (40), such as a clamping part (40) comprising a spring and/or a weight, so as to force the covering body (21) towards said surface part (2sp 10s) of the first glass sheet (2),
such as wherein the clamping force (F1) pushes the covering body (21) so as to deform the softened seal material (22).

13. Method according to any of the preceding claims, wherein the method comprises arranging an evacuation cup (9), such as on the second surface (2b) of the first glass sheet, so as to cover the through hole (10),
wherein said evacuation of the gap (6) comprises evacuating the gap (6) by means of a pump (30) which is in fluid communication (30a) with an interior cavity (9a) of the evacuation cup (9),
such as wherein the clamping part (40) is arranged inside the evacuation cup (9), such as is attached to a housing (9b) of the evacuation cup.

14. Method according to any of the preceding claims, wherein said heating of the solidified seal material (22) of the cover (20) so as to soften the solidified seal material (22) to provide that the seal material adhere to the surface part (10s, 2sp) of the first glass sheet (2) around the through hole (10) comprises heating by radiation heating provided by means of a radiation heater (7), such as a laser, which emits a heating beam (7a),
wherein the second glass sheet (3) is placed between the radiation heater (7) and the seal material (22) of the cover (20), so that the seal material (22) of the cover (20) is heated my means of a heating beam which is radiated through the second glass sheet (3).

15. Method according to any of the preceding claims, such as according to claim 12, wherein the through hole (10) is a stepped through hole comprising a smaller diameter portion (10a) and a larger diameter portion (10b),
wherein the larger diameter portion (10b) is arranged proximate the second surface (2b) of the first glass sheet (2) and wherein the smaller diameter portion (10a) is arranged proximate the gap (6),
wherein a step surface (10s, 2sp) is arranged between the larger diameter portion (10b) and the smaller diameter portion (10a),
wherein said arranging of the cover (20) comprises arranging the solidified seal material (22) opposite to, such as so as to support on, the step surface (10s, 2sp) so that the covering body (21) is arranged in the larger diameter portion (10b) and covers the smaller diameter portion (10a).
